# EUROPEAN PATENT APPLICATION

(11) **EP 4 712 560 A1**
(43) Date of publication of application: **18.03.2026**
(21) Application number: 24807462.7
(22) Date of filing: 10.05.2024
(51) Int. Cl.: H04W 36/00, H04W 40/36, H04W 36/30, H04W 40/12, H04W 88/04

(54) **PATH SWITCHING**

(30) Priority: 12.05.2023 US 202363465889 P
(71) Applicant: LG Electronics Inc., Yeongdeungpo-gu Seoul 07336 (KR)
(72) Inventor: KIM, Seokjung, Seoul 06772 (KR); BYUN, Daewook, Seoul 06772 (KR)
(74) Representative: Frenkel, Matthias Alexander
(86) International application number: PCT/KR2024/006354
(87) International publication number: WO 2024/237587

(57) **Abstract**

A disclosure of the present disclosure provides a method of performing handover-related communication by a source base station. This method includes the steps of: receiving, from a UE, a report message including a measurement result related to at least one relay UE; determining a target path type for the UE; transmitting a handover request message to a first target base station; receiving a handover preparation failure message including a cause value from the first target base station; and re-determining a target path type of the UE.

## Description

### TECHNICAL FIELD

The present specification relates to a radio communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 130 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

In situations where a remote UE communicates with the network via a relay UE, there is an issue where path switching is not effectively supported.

### DISCLOSURE

### TECHNICAL SOLUTION

The candidate relay UE list may be included in the handover preparation failure message.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIG. 5 illustrates an example architecture of UE-to-Network Relay.
FIG. 6 illustrates a procedure related to inter-gNB path switching from a direct path to an indirect path.
FIG. 7 illustrates a procedure related to inter-gNB path switching from an indirect path to an indirect path according to an embodiment of the present disclosure.
FIG. 8a and FIG. 8b illustrate procedures related to inter-gNB-CU switching from a direct path to an indirect path.
FIG. 9a and FIG. 9b illustrate procedures, according to an embodiment of the present disclosure, when the target base station does not support inter-gNB path switching.
FIG. 10a and FIG. 10b illustrate procedures according to an embodiment of the present disclosure when the target base station cannot select a target relay UE from the candidate relay UE list.
FIG. 11 illustrates a procedure supporting service continuity for path switching from an indirect path to a direct path between inter-gNBs according to an embodiment of the present disclosure.
FIG. 12 illustrates a procedure supporting service continuity for path switching from a direct path to an indirect path between inter-gNBs according to an embodiment of the present disclosure.
FIG. 13a and FIG. 13b illustrate a procedure supporting service continuity during path switching from an indirect path to a direct path between inter-gNBs according to an embodiment of the present disclosure.
FIG. 14 is an example of a procedure for switching from an indirect path to a direct path according to an embodiment of the present disclosure.
FIG. 15 illustrates a procedure for switching the direct path of a remote UE in the RRC_CONNECTED state to an indirect path according to an embodiment of the present disclosure.
FIG. 16 illustrates an example of performing a handover preparation procedure according to an embodiment of the present disclosure.
FIG. 17 illustrates an example of handover resource allocation according to an embodiment of the present disclosure.
FIGS. 18a and 18b illustrate an example of a procedure for the source gNB to reselect a list of target cells and/or candidate relay UE(s) according to an embodiment of the present disclosure.
FIG. 19a and FIG. 19b show an example of a procedure for the source gNB to redetermine path switching according to an embodiment of the present disclosure.
FIG. 20 shows an example of a procedure according to an embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

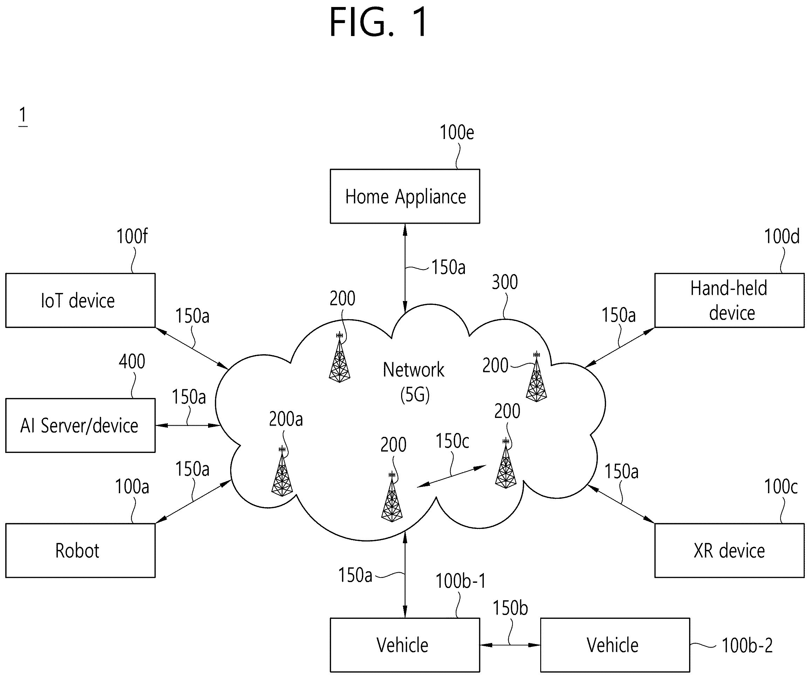

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without transmiting through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

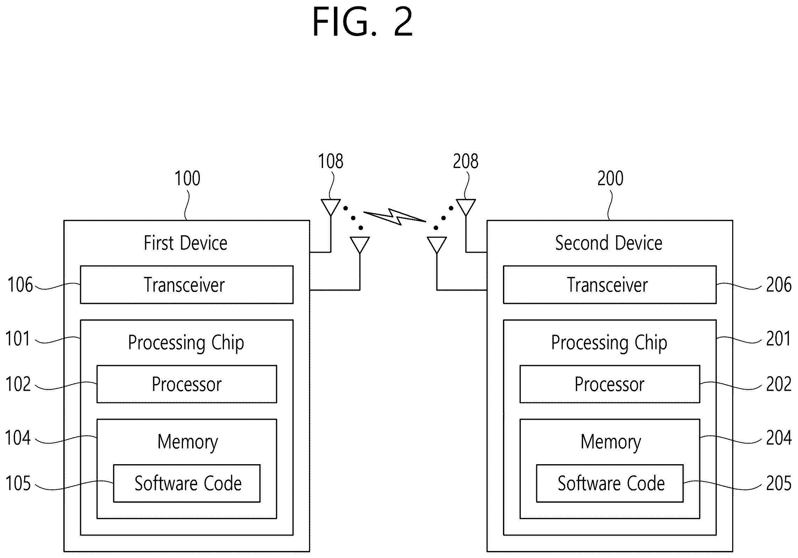

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE operation according to an implementation of the present disclosure or control the transceiver(s) 106 to perform the UE operation according to an implementation of the present disclosure. The processor(s) 202 connected to, mounted on or launched in the second wireless device 200 may be adapted to perform the BS operation according to an implementation of the present disclosure or control the transceiver(s) 206 to perform the BS operation according to an implementation of the present disclosure.

In the present disclosure, a BS is also referred to as a node B (NB), an eNode B (eNB), or a gNB.

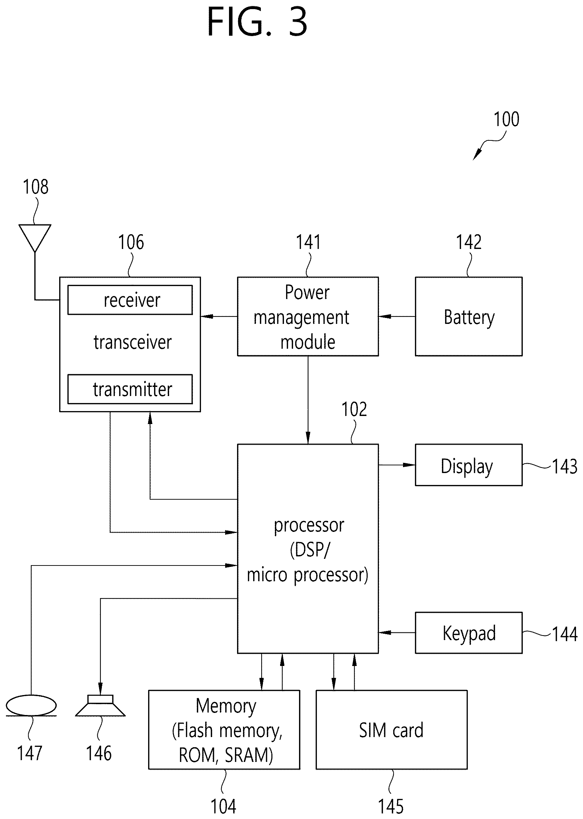

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

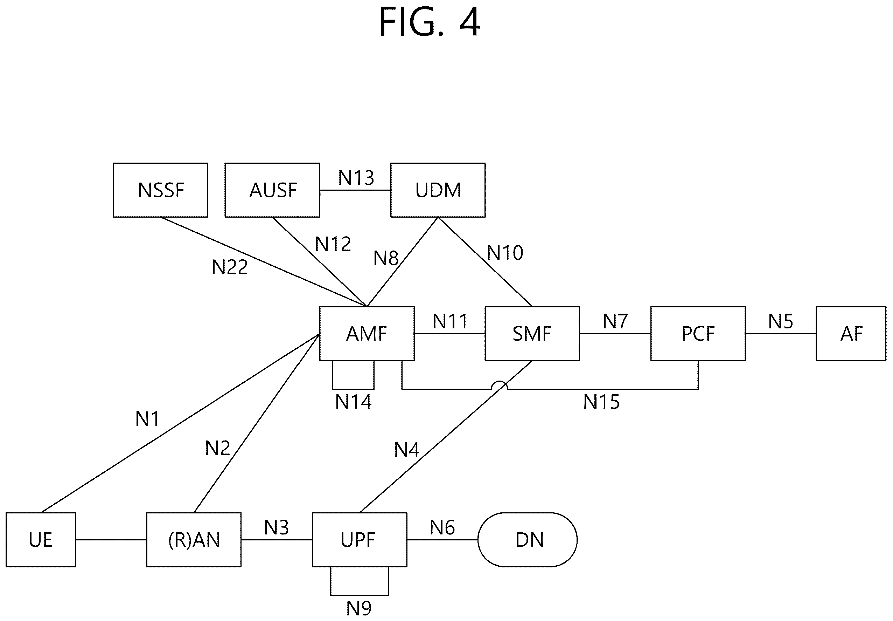

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (SG-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

### < UE-to-Network Relay >

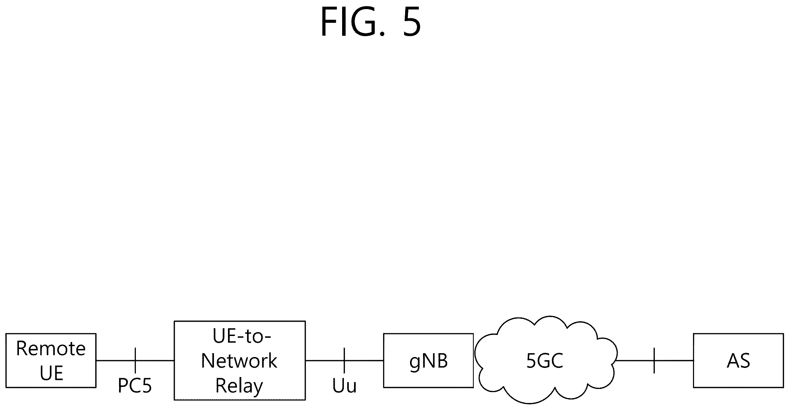

FIG. 5 illustrates an example architecture of UE-to-Network Relay.

Referring to FIG. 5, a UE-to-Network Relay supports the network connection of a Remote UE.

The PC5 link is the interface between the UE and the UE-to-Network Relay. The Uu link is the interface between the UE-to-Network Relay and the base station.

If a UE has established a PC5 link with the UE-to-Network Relay, the UE is considered a Remote UE.

A UE-to-Network Relay entity may provide functionality to support connectivity to the network for Remote UEs. UE-to-Network Relay can be used for both public safety services and commercial services (e.g., interactive services).

If a UE (e.g., a Remote UE) successfully establishes a PC5 link to a UE-to-Network Relay, the UE (e.g., the Remote UE) can be considered a Remote UE for that specific UE-to-Network Relay. The Remote UE may be located within NG-RAN coverage or outside NG-RAN coverage.

The UE-to-Network Relay may relay unicast traffic (UL and DL traffic) between the Remote UE and the network. The UE-to-Network Relay should provide a generic capability to relay all IP traffic.

For unicast traffic between Remote UEs and UE-to-Network Relays, one-to-one direct communication may be used.

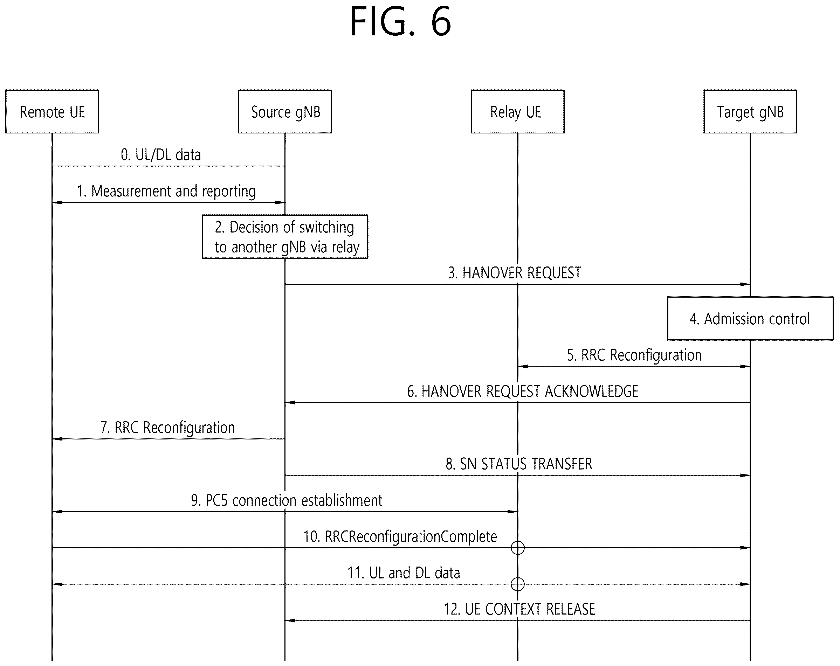

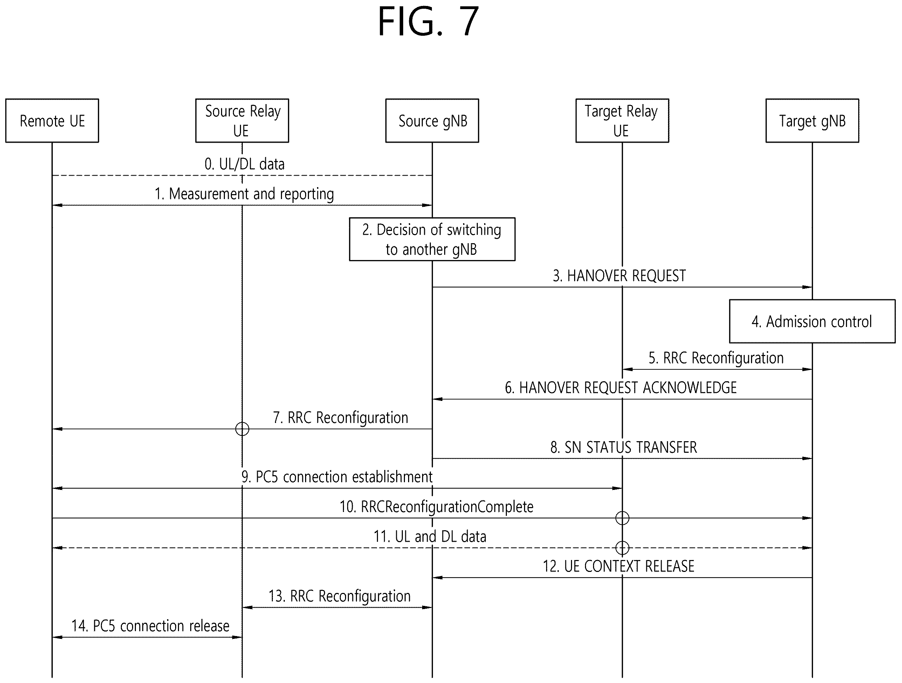

Referring to FIG. 6 and FIG. 7, an example of path switching is described.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 6** **illustrates a procedure related to inter-gNB path switching from a direct path to an indirect path.**

This section describes an example of inter-gNB path switching from a direct path to an indirect path. In the example of FIG. 6, at step 0, the Remote UE is communicating with the source gNB via a direct path, performing direct communication. According to the example of FIG. 6, the path over which the UE communicates may change from a direct path between the Remote UE and the source gNB to an indirect path where the Remote UE communicates with the Target gNB via the Relay UE.

Layer 2 (L2) UE to Network (U2N) For service continuity of the Remote UE, the following procedure may be supported. When the L2 U2N Remote UE is in the RRC_CONNECTED state for another gNB, the procedure according to the example in FIG. 6 is used when switching from the direct path to the indirect path via the L2 U2N Relay UE.

For reference, the term Remote UE described below may be used interchangeably with U2N Remote UE.
0. The Remote UE may exchange uplink (UL) data and/or downlink (DL) data with the Source gNB.
1. After an L2 U2N remote UE measures/discovers candidate L2 U2N relay UEs, the L2 U2N remote UE reports measurements and Uu measurements for one or more candidate L2 U2N relay UEs to the source gNB:
   - The L2 U2N Remote UE filters appropriate L2 U2N Relay UEs based on relay selection criteria before reporting. The L2 U2N Remote UE must report only L2 U2N Relay UE candidates that satisfy the higher-layer criteria;

The report may include at least one of the L2 U2N relay UE ID, the serving cell ID of the L2 U2N relay UE, or the sidelink measurement quantity information. SD-RSRP is used as the sidelink measurement quantity.
2. The source gNB decides to trigger a path switch of the L2 U2N remote UE to the target gNB's indirect path based on the measurement report and Radio Resource Management (RRM) information.
3. To allow the target side to prepare for path switching, the source gNB transmits a HANDOVER REQUEST message to the target gNB. The handover request message includes a list of candidate target relay UE IDs belonging to one cell and the remote UE L2 ID.
4. The target gNB may perform admission control.
5. The target gNB selects one target relay UE from the list of candidate relay UE(s) provided by the source gNB. For relay configuration, which include one or more of the L2 U2N Remote UE's local ID and L2 ID, Uu Relay RLC channel setup for relaying, PC5 Relay RLC channel configuration, or bearer mapping configuration, the Target gNB transmits an RRCReconfiguration message to the L2 U2N Relay UE.
6. The target gNB transmits a HANDOVER REQUEST ACKNOWLEDGE message including new RRC configuration for the L2 U2N remote UE, to the source gNB.
7. The source gNB transmits an RRCReconfiguration message to the L2 U2N remote UE. The RRCReconfiguration message includes at least one of the L2 U2N Relay UE ID, the Remote UE's local ID, the PC5 Relay RLC channel configuration for relay traffic, or the related Uu end-to-end radio bearer(s). After receiving the RRCReconfiguration message from the source gNB, the L2 U2N remote UE stops user plane and control plane transmission via the direct path.
8. The source gNB transmits an SN STATUS TRANSFER message to the target gNB. The source gNB transmits the uplink PDCP SN receiver status and the downlink PDCP SN transmitter status (e.g., for RLC AM) of the DRB of the L2 U2N Remote UE where PDCP status preservation is applied.
9. The L2 U2N remote UE establishes a PC5 connection with the L2 U2N relay UE.
10. The L2 U2N remote UE transmits an RRCReconfigurationComplete message to the target gNB via the L2 U2N relay UE.
11. The data path switches from the direct path to the indirect path via the target L2 U2N relay UE between the L2 U2N remote UE and the target gNB.
12. The target gNB transmits a UE context release message to the source gNB to indicate the success of the path switch.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 7** **illustrates a procedure related to inter-gNB path switching from an indirect path to an indirect path according to an embodiment of the present disclosure.**

An example of inter-gNB path switching from indirect path to indirect path is described. In the example of FIG. 7, at step 0, the Remote UE is communicating with the source gNB via the source relay UE based on an indirect path. According to the example of FIG. 7, the path over which the Remote UE communicates may be changed from the indirect path to the source gNB via the source relay UE to the indirect path to the target gNB via the target relay UE.

For gNB-to-service continuity of an L2 U2N Remote UE connected via an indirect path, a procedure may be used to switch to another indirect path via a target L2 U2N Relay UE that is in the RRC_CONNECTED state for another gNB.
1. After the L2 U2N remote UE measures/discovers candidate L2 U2N Relay UEs, the L2 U2N remote UE reports measurements and Uu measurements for one or more candidate L2 U2N Relay UEs to the source gNB:
   - The L2 U2N Remote UE filters appropriate L2 U2N Relay UEs based on relay selection criteria before reporting. The L2 U2N Remote UE must report only L2 U2N Relay UE candidates that satisfy the upper-layer criteria;

The report must include at least the L2 U2N Relay UE ID, the serving cell ID of the L2 U2N Relay UE, and the sidelink measurement quantity information. SD-RSRP is used as the sidelink measurement quantity.
2. The source gNB decides to trigger the L2 U2N remote UE to switch to an indirect path of another gNB.
3. To enable the target side to prepare for the path handover, the source gNB transmits a HANDOVER REQUEST message to the target gNB. The handover request message includes the remote UE L2 ID and a list of candidate target relay UE IDs belonging to the same cell.
4. The target gNB may perform admission control.
5. The Target gNB selects one Target Relay UE from the list of candidate relay UE(s) provided by the Source gNB. The Target gNB transmits an RRCReconfiguration message to the L2 U2N Relay UE for relay configuration. The RRCReconfiguration message includes at least one of the L2 U2N Remote UE's local ID and L2 ID, configuration for the Uu Relay RLC channel and PC5 Relay RLC channel for relaying, or bearer mapping configuration.
6. The target gNB transmits a HANDOVER REQUEST ACKNOWLEDGE message that includes the new RRC configuration for the L2 U2N Remote UE to the source gNB.
7. The source gNB transmits an RRCReconfiguration message to the L2 U2N Remote UE. The RRCReconfiguration message may include at least one of the target L2 U2N Relay UE ID, the Remote UE's local ID, the PC5 Relay RLC channel configuration for relay traffic, or the associated end-to-end Uu radio bearer. After the L2 U2N remote UE receives the RRCReconfiguration message from the source gNB, the L2 U2N remote UE stops transmitting the user plane and control plane via the (source) indirect path.
8. This step may be performed identically to step 8 in FIG. 6.
9. The L2 U2N remote UE establishes a PC5 connection to the target L2 U2N relay UE.
10. The L2 U2N remote UE transmits an RRCReconfigurationComplete message to the target gNB via the target L2 U2N relay UE.
11. The data path is switched to an indirect path between the L2 U2N remote UE and the target gNB via the target L2 U2N relay UE.
12. The target gNB transmits a UE CONTEXT RELEASE message to the source gNB to indicate the successful path switch.
13. The source gNB transmits an RRCReconfiguration message to the source L2 U2N Relay UE to reconfigure the connection between the source L2 U2N Relay UE and the source gNB. The RRCReconfiguration message to the source L2 U2N Relay UE may be transmitted at any time after step 7, depending on the source gNB implementation (e.g., releasing configuration of the Uu Relay RLC channel and PC5 Relay RLC channel for the relay, configuring bearer mappings related to the L2 U2N Remote UE).
14. The AS layer of the L2 U2N Relay UE or L2 U2N Remote UE may indicate to the upper layer to release the PC5 unicast link after receiving the RRCReconfiguration message from the source gNB. The timing for executing the link release depends on the UE implementation.

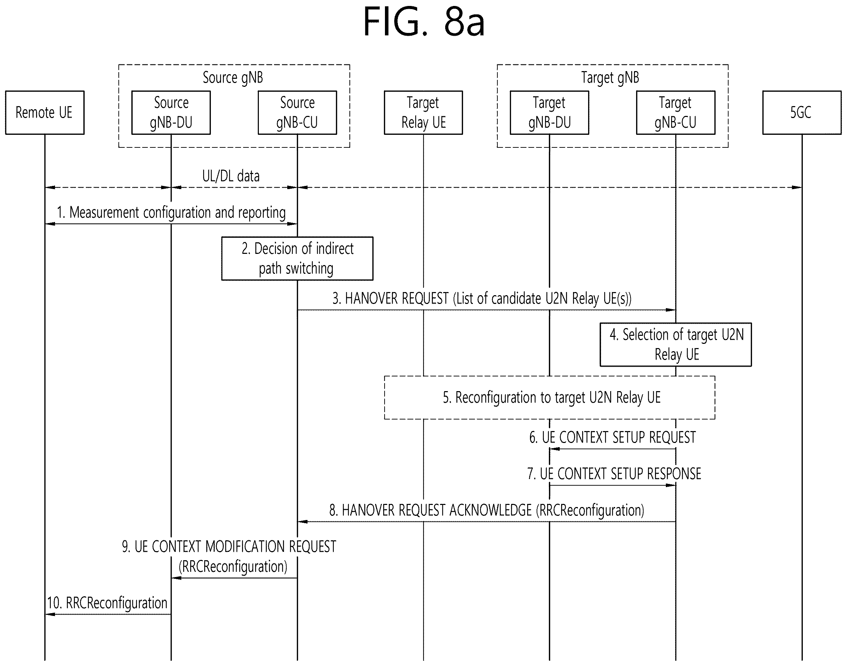

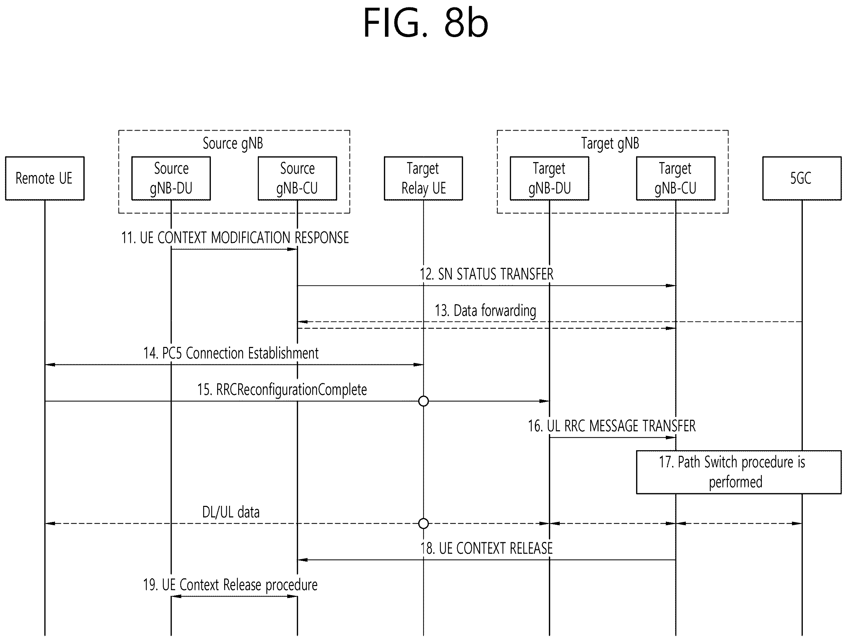

Referring to the examples in FIG. 8a and FIG. 8b, inter-gNB-CU switching from a direct path to an indirect path is described.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 8a** **and** **FIG. 8b** **illustrate procedures related to inter-gNB-CU switching from a direct path to an indirect path.**

This describes an example procedure for switching from a direct path to an indirect path and changing the gNB-CU in the UE's direct path for U2N Remote.
1. Uu measurement configuration and measurement reporting signaling are performed between the U2N Remote UE and the source gNB-CU to evaluate both the relay link measurement and the Uu link measurement. After measuring/discovering candidate U2N relay UEs, the U2N Remote UE may report the Uu measurement results to one or more candidate U2N relay UEs.
2. The source gNB-CU decides to switch the direct path of the U2N remote UE to an indirect path via one of the candidate U2N relay UEs serving the same target cell on another gNB.
3. The source gNB-CU transmits a HANDOVER REQUEST message to the target gNB-CU. The handover request message may include a list of candidate U2N relay UEs.
4. The target gNB-CU determines to accept the indirect path switch to the target U2N relay UE from among the candidate U2N relay UEs.
*5.* If the target U2N relay UE is in the RRC_CONNECTED state, a re-configuration to the target U2N relay UE is performed between the target U2N relay UE, the target gNB-DU, and the target gNB-CU. The target gNB-CU allocates a local ID to the U2N Remote UE. The target gNB-CU transmits an RRCReconfiguration message to the target U2N relay UE. If the target U2N relay UE is in the RRC_IDLE/INACTIVE state, this step is omitted, and configuration for the target U2N relay UE is performed in step 15.
6. The target gNB-CU transmits a UE CONTEXT SETUP REQUEST message (e.g., including at least path configuration settings) for the U2N Remote UE to the target gNB-DU.
7. The target gNB-DU responds to the gNB-CU with a target UE CONTEXT SETUP RESPONSE message.
8. The target gNB-CU responds to the source gNB-CU by transmitting a handover request accept message including an RRCReconfiguration message. The content of the RRCReconfiguration message may include at least one of path switch configuration, PC5 RLC channel configuration for relay traffic, bearer mapping, or related radio bearers.
9. To transmit the handover command to the U2N Remote UE and instruct the U2N Remote UE to stop data transmission, the source gNB-CU transmits a UE CONTEXT MODIFICATION REQUEST message to the source gNB-DU.
10. The source gNB-DU transmits an RRCReconfiguration message to the U2N Remote UE. After receiving the RRCReconfiguration message from the source gNB, the U2N Remote UE ceases transmission of UP and CP via Uu.
11. The source gNB-DU transmits a UE CONTEXT MODIFICATION RESPONSE message to the source gNB-CU.
12. The source gNB-CU transmits an SN STATUS TRANSFER message to the target gNB-CU.
13. Data forwarding may be performed from the source gNB-CU to the target gNB-CU.
14. The U2N remote UE establishes a PC5 connection with the target U2N relay UE.
15. The U2N Remote UE completes the path switching procedure by transmiting an RRCReconfigurationComplete message to the target gNB-DU via the target U2N Relay UE. If the target U2N Relay UE is in the RRC_IDLE/INACTIVE state when receiving the RRCReconfigurationComplete message, when the target U2N Relay UE receives the RRCReconfigurationComplete message, an RRC configuration/resumption procedure for the target U2N Relay UE is triggered, causing the target U2N Relay UE to enter the RRC_CONNECTED state.
17. To switch the DL data path to the target gNB-CU and perform the configuration of an NG-C interface instance towards the target gNB-CU, the path switching procedure is performed.
18. The target gNB-CU transmits the UE CONTEXT RELEASE message to the source gNB-CU.
19. To release the UE context of the U2N remote UE at the source gNB-DU, the source gNB-CU may initiate the F1 UE context release procedure.

According to prior arts, path switching, and indirect-to-indirect path switching in Inter-gNB situations and were not considered. During the handover process, the source gNB pre-determines whether the target gNB should use a direct path or an indirect path for the remote UE. If the source gNB determines that an indirect path should be used, the source gNB may transmit a HANDOVER REQUEST message to the target gNB. In this case, the HANDOVER REQUEST message includes a list of candidate relay UE(s) that can be used for the indirect path. Based on the list of candidate relay UE(s) received from the source gNB, the target gNB may select a target relay UE and may configure an indirect path to service the remote UE.

However, if the target gNB does not support inter-gNB direct/indirect-to-indirect path switching, there is an issue where the target gNB ignores the candidate relay UE list sent by the source gNB and applies a legacy handover. Specifically, instead of configuring an indirect path with a specific relay UE from the list of candidate relay UEs, the target gNB may connect the remote UE to the target gNB via the target Uu cell included in the HANDOVER REQUEST message. When this situation occurs, switching to a direct path is applied instead of switching to the indirect path determined by the source gNB. In this situation, the target gNB ignores the target path type determined by the source gNB, leading to the problem that the source gNB is unaware that the target gNB has decided to switch to a direct path.

Furthermore, even if the target gNB supports inter-gNB direct/indirect-to-indirect path switching, a situation may arise where there is no suitable relay UE within the candidate relay UE list transmitted by the source gNB to serve the remote UE. In this situation, even if the target gNB terminates the handover procedure, the source gNB cannot know the reason for the termination. Consequently, the source gNB may re-request a handover to the target gNB for the same path type.

In other words, path switching of the remote UE may occur during the handover procedure. However, the specific operation related to path switching in inter-gNB situations where the gNB changes and indirect-to-indirect path switching was not considered in the past.

For example, the HANDOVER REQUEST message transmitted by the source base station (e.g., gNB) to the target base station (e.g., gNB) may include a Candidate Relay UE List IE that can be used as an indirect path. According to the prior arts, the criticality of this IE was defined as "ignore". The target base station may not support inter-gNB direct/indirect-to-indirect path switching. In this case, according to the prior arts, there is a problem where the target base station may ignore the candidate relay UE list transmitted by the source base station and proceed with the handover.

Furthermore, according to the prior arts, when the target base station fails to find a relay UE within the candidate relay UE list to serve the remote UE, the target base station terminates the handover without notifying the source base station.

As illustrated in the example below, service continuity must be provided for L2 U2N remote UEs through path switching between different gNBs.

For example, a mechanism must be specified to enhance service continuity for single-hop Layer-2 UE-to-network relay in the following scenario:
A. Inter-gNB indirect-to-direct path switching (i.e., switching from "remote UE <-> relay UE A <-> gNB X" to "remote UE <-> gNB Y")
B. Inter-gNB direct-to-indirect path switching (i.e., switching from "remote UE <-> gNB X" to "remote UE <-> relay UE A <-> gNB Y")
C. Intra-gNB indirect-to-indirect path switching (i.e., switching from "remote UE <-> relay UE A <-> gNB X" to "remote UE <-> relay UE B <-> gNB X")
D. Inter-gNB indirect-to-indirect path switching (i.e., switching from "remote UE<-> relay UE A <-> gNB X" to "remote UE <-> relay UE B <-> gNB Y")

According to prior arts, service continuity for L2 U2N remote UEs can only be provided in intra-gNB situations. That is, only direct-to-indirect path switching or indirect-to-direct path switching can be provided in intra-gNB situations.

Therefore, a problem exists in the prior art where path switching in inter-gNB situations and indirect-to-indirect path switching cannot be performed. According to various examples of the present disclosure, path switching in inter-gNB situations and indirect-to-indirect path switching may be supported.

Based on the handover procedure, the remote UE may be served by the target gNB. In this case, during the handover process, the source gNB may pre-determine whether a direct path or an indirect path will be used for the remote UE at the target gNB.

For example, the source gNB may determine that an indirect path must be used at the target gNB. In this case, the source gNB may transmit a HANDOVER REQUEST message to the target gNB. The source gNB may include in the HANDOVER REQUEST message a list of candidate relay UE(s) that can be used as the indirect path. The target gNB may select the target relay UE from the list of candidate relay UE(s) received from the source gNB. The target gNB performs the configuration of an indirect path to service the remote UE based on the target relay UE.

However, the target gNB may not support inter-gNB direct/indirect-to-indirect path switching. In this case, according to prior arts, the target gNB may ignore the candidate relay UE list transmitted by the source gNB and may apply a legacy handover. In this case, the target gNB may establish a direct connection between the remote UE and the target gNB via the target Uu cell included in the HANDOVER REQUEST message, without configuring an indirect path with one of the relay UEs belonging to the candidate relay UE list. This results in switching to a direct path instead of the indirect path determined by the source gNB. That is, the target gNB violates the target path type determined by the source gNB. However, the source gNB is unaware that the target gNB has decided to switch to the direct path.

Furthermore, even if the target gNB supports inter-gNB direct/indirect-to-indirect path switching, it may sometimes fail to select an appropriate relay UE. For example, within the list of candidate relay UE(s) sent by the source gNB, the target gNB may not have a suitable relay UE to service the remote UE. In such a situation, the target gNB may terminate the handover procedure. However, the source gNB cannot know the reason why the target gNB terminated the handover procedure. Consequently, the source gNB may request the same type of handover from the target gNB again.

Therefore, the various examples of the present disclosure seek to address the various problems described above. The present disclosure may enable the target gNB to inform the source gNB whether path switching was successfully performed and/or the reason the handover was aborted. For example, the target gNB may explicitly inform the source gNB that inter-gNB direct/indirect-to-indirect path switching was not properly executed. Based on this, a method is described whereby the source gNB may determine a new target.

Various examples disclosed in the present disclosure illustrate how the Target gNB informs the source gNB that inter-gNB direct/indirect-to-indirect path switching was not properly performed during the handover process. For example, the Target gNB may receive a HANDOVER REQUEST message from the source gNB that includes a list of candidate relay UEs. If the Target gNB does not support inter-gNB direct/indirect-to-indirect path switching, the Target gNB may terminate the ongoing handover procedure. In this case, the Target gNB may inform the source gNB that it does not support inter-gNB direct/indirect-to-indirect path switching by transmitting a new cause value or indication.

The target gNB may receive a HANDOVER REQUEST message from the source gNB including a list of candidate relay UEs. In this case, the target gNB may be unable to select an appropriate relay UE from within that list capable of servicing the Remote UE. In such a case, the target gNB may terminate the ongoing handover procedure and notify the source gNB that it was unable to select an appropriate relay UE by transmitting a new cause value or indication.

For some or all of the service operations between Core NFs according to various examples disclosed in the present disclosure newly defined service operations may be used. Furthermore, for some or all of the NG messages between AMF and NG-RAN according to various examples disclosed in the present disclosure newly defined NG messages may be used. Furthermore, newly defined RRC messages may be used for some or all of the RRC messages between the NG-RAN and the terminal according to various examples of the present disclosure.

In the procedures according to various examples of the present disclosure, some steps may be performed simultaneously/in parallel or in a different order.

The names of indication or parameter information in the various examples disclosed in the present disclosure are illustrative and may be interpreted as other names for the proposed procedure/purpose/method.

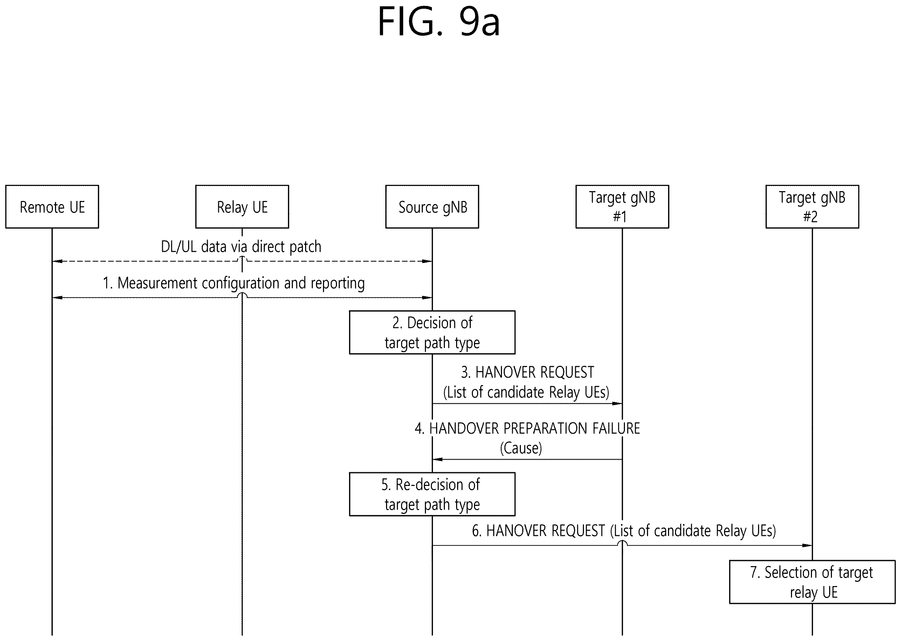

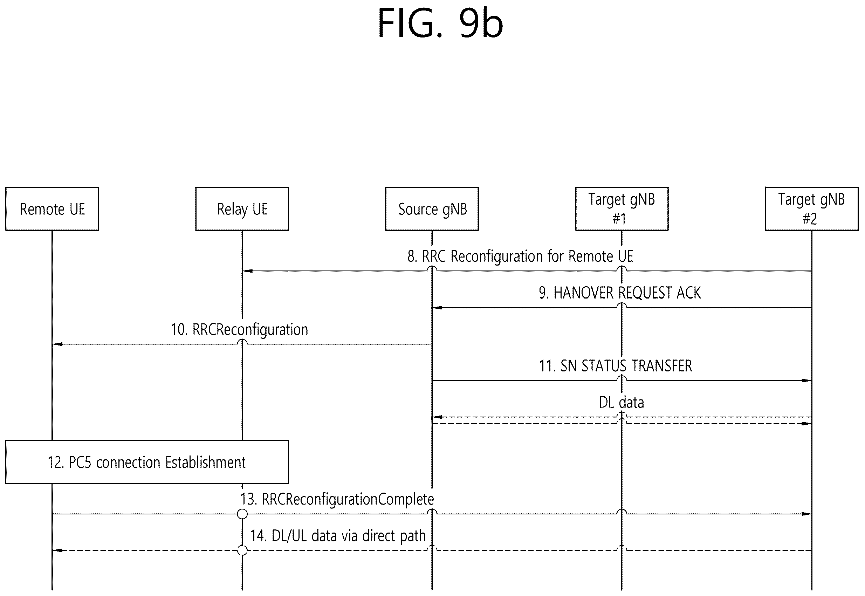

Referring to the examples in FIGS. 9a and 9b, we describe the procedure when the target base station (e.g., Target NG-RAN, target gNB, etc.) does not support inter-gNB path switching for the remote UE.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 9a** **and** **FIG. 9b** **illustrate procedures, according to an embodiment of the present disclosure, when the target base station does not support inter-gNB path switching.**

For reference, in the various examples of the present disclosure, the terms "target base station," "target gNB," and "target NG-RAN" may all be used interchangeably.

FIG. 9a and FIG. 9b illustrate an example where the target gNB informs the source gNB of the fact that the target gNB either cannot understand/execute the IE related to Rel-18 inter-gNB path switching for remote UE, or the target gNB can understand the IE related to Rel-18 inter-gNB path switching for remote UE but does not support it. By quickly informing the source gNB of this fact, the target gNB enables the source gNB to determine a new target gNB.

Step 0: The Remote UE receives DL data and transmits UL data based on the direct path via the Source gNB.

Step 1: The Remote UE may receive a measurement configuration from the Source gNB. Based on the measurement configuration, the Remote UE may perform measurement/discover operations for nearby relay UEs. The Remote UE reports the measurement/discover results to the source gNB. For example, the Remote UE may transmit a report message including the measurement/discover results to the source gNB. These results may include the L2 U2N Relay UE ID, serving cell ID, and sidelink measurement results of candidate relay UE(s) located in the neighboring area.

Step 2: Based on the measurement result received from the remote UE in Step 1, the Source gNB may decide to handover the remote UE to target gNB #1. The Source gNB may determine the target path type. For example, the Source gNB may determine whether the Remote UE may use a direct path via the Uu cell of Target gNB #1 or an indirect path via a Relay UE located within the cell of Target gNB #1. The examples in FIGS. 9a and 9b illustrate examples where the Source gNB decided to serve the remote UE via an indirect path at Target gNB #1.

NOTE: The order in which the Source gNB determines the target gNB, target cell, and target path type is a gNB implementation detail.

Step 3: The source gNB may transmit a handover request message to target gNB #1. For example, based on the measurement result received from the remote UE in Step 1, the source gNB may determine a list of candidate relay UE(s) that can be utilized for an indirect path at target gNB #1. The source gNB transmits a HANDOVER REQUEST message that includes the list of candidate relay UE(s) to target gNB #1. The Source gNB may configure (or set) the criticality of the IE that includes the list of candidate relay UE(s) within the HANDOVER REQUEST message to reject.

Step 4: The source gNB configures (or sets) the criticality of the IE that includes the list of candidate relay UE(s) within the HANDOVER REQUEST message to reject. Target gNB #1 does not have the capability to understand/execute this IE. Consequently, target gNB #1 may stop the handover procedure for the remote UE and notify the source gNB of the stopping by transmitting a HANDOVER PREPARATION FAILURE message. At this time, Target gNB #1 may include a cause value or indication within the HANDOVER PREPARATION FAILURE message to indicate that Target gNB #1 cannot understand/execute the IE that includes the list of candidate relay UEs.

NOTE: The target gNB may understand the IE that includes the list of candidate relay UE(s) within the HANDOVER REQUEST message, but the target gNB may not be able to perform a handover to the target relay UE within the candidate relay UE list because the target gNB does not support inter-gNB path switching for remote UEs. In this case, the target gNB can still transmit the cause value or indication defined above to the source gNB.

NOTE: To avoid situations where the handover procedure is interrupted, actions may be performed to exchange information between gNBs regarding whether they support inter-gNB path switching for remote UEs, using procedures such as Xn Setup or Xn Configuration update. In this case, if the source gNB decides to perform path switching to an indirect path, the source gNB may only consider gNBs that support inter-gNB path switching for remote UEs during the process of selecting the target gNB.

Step 5: The source gNB may receive a cause value or indication that Target gNB #1 cannot understand/execute the IE that includes the list of candidate relay UE(s) from Step 4. The source gNB may determine that handover to Target gNB #1 is impossible and determine a new target gNB. Therefore, the source gNB may once again perform one or more of the following: target gNB selection, target cell selection, or target path type selection (e.g., Step 2). The source gNB may determine path switching to the new gNB's direct path or indirect path.

In FIG. 9a and FIG. 9b, it is assumed that the Source gNB determined in Step 5 to serve the remote UE via an indirect path at Target gNB #2.

NOTE: Step 5 may be performed even if the Target gNB cannot perform a handover to the target relay UE within the candidate relay UE list, because it does not support inter-gNB path switching for the remote UE, despite the Target gNB being able to understand the IE that includes the list of candidate relay UE(s) within the HANDOVER REQUEST message. For example, the source gNB may perform Step 5 based on the cause value or indication received in Step 4.

Step 6: The Source gNB may transmit a HANDOVER REQUEST message including a list of candidate relay UE(s) to Target gNB #2. For example, based on the measurement result received from the remote UE in Step 1, the Source gNB may determine a list of candidate relay UE(s) that can be utilized as indirect paths at Target gNB #2. The Source gNB transmits a HANDOVER REQUEST message that includes the list of candidate relay UE(s) to Target gNB #2.

Step 7: Target gNB #2 may select a target relay UE. Target gNB #2 may support inter-gNB path switching for remote UEs. Target gNB #2 may understand/perform the IE that includes the list of candidate relay UE(s) within the HANDOVER REQUEST message. Therefore, Target gNB #2 may select a relay UE from the list of candidate relay UE(s) received in Step 6 to assist in DL/UL data transmission for the respective remote UE.

Step 8: Target gNB #2 may transmit the information required for the selected relay UE to serve the remote UE to the selected relay UE via the RRC Reconfiguration procedure.

Step 9: Target gNB #2 may transmit a HANDOVER REQUEST ACK message to the source gNB. For example, a HANDOVER REQUEST ACK message including an RRC Reconfiguration message, which includes the information necessary for the Remote UE to access Target gNB #2 via the relay UE selected in Step 7, may be transmitted to the source gNB.

Step 10: The source gNB forwards the RRC Reconfiguration message received in Step 9 to the remote UE.

Step 11: The source gNB transmits an SN STATUS TRANSFER message to Target gNB #2.

Step 12: The remote UE establishes a PC5 connection with the relay UE based on the RRC Reconfiguration message received in Step 10.

Step 13: The Remote UE generates an RRC Reconfiguration Complete message in response to the RRC Reconfiguration message received in Step 10. The Remote UE may complete the handover procedure by transmitting the RRC Reconfiguration Complete message to Target gNB #2 via the relay UE.

Step 14: DL/UL data is exchanged via the relay UE located within the cell of Target gNB #2.

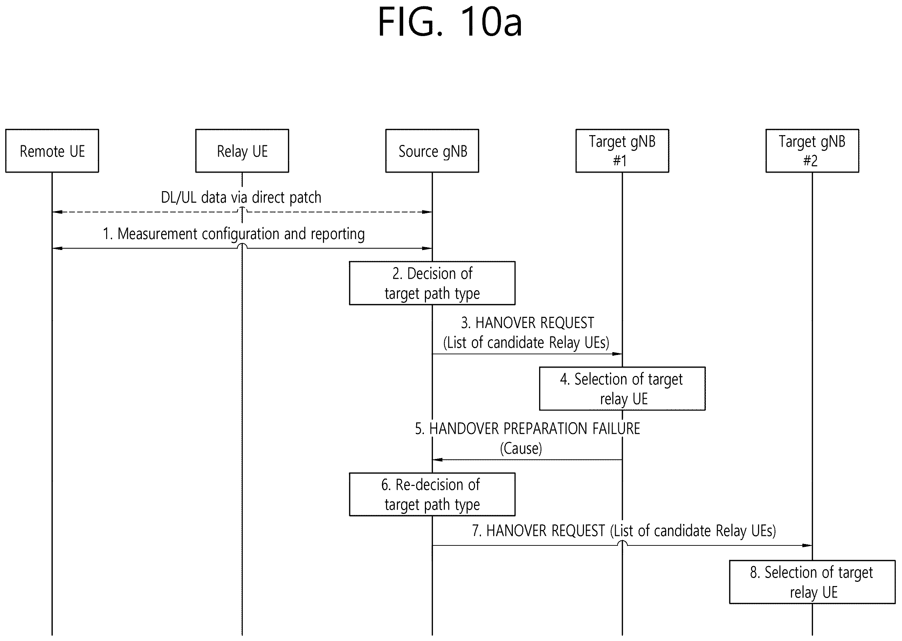

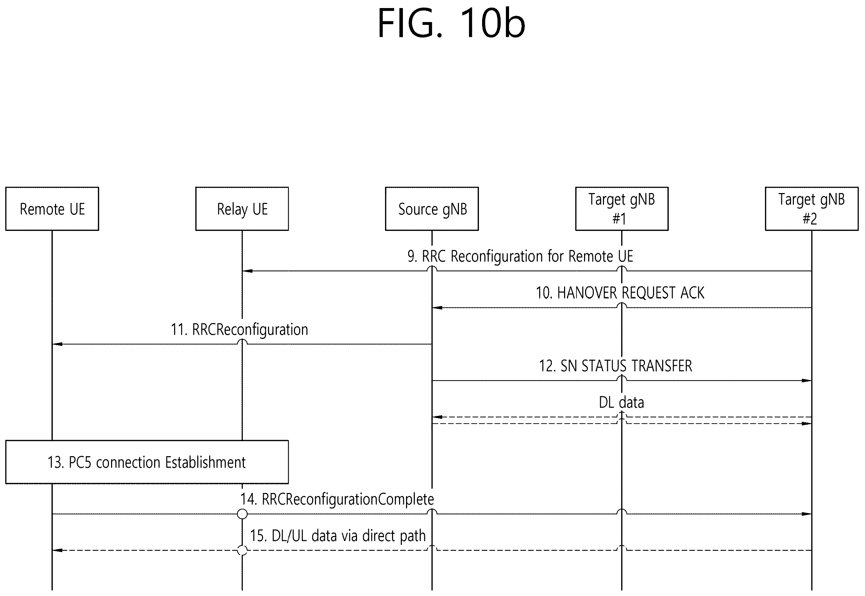

Referring to the examples in FIG. 10a and FIG. 10b, this section describes the procedure when the Target NG-RAN cannot select a Target Relay UE from the list of candidate relay UE(s) to support the remote UE.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 10a** **and** **FIG. 10b** **illustrate procedures according to an embodiment of the present disclosure when the target base station cannot select a target relay UE from the candidate relay UE list.**

The Target gNB in FIGS. 10a and 10b may support Rel-18 inter-gNB path switching for remote. The examples in FIGS. 10a and 10b illustrate a scenario where the Target gNB cannot select a target relay UE capable of serving the remote UE from the list of candidate relay UE(s) transmitted by the source gNB. The Target gNB can quickly notify the source gNB that the Target gNB cannot select a target relay UE. Accordingly, the source gNB may determine a new Target gNB, target cell, target path type, or candidate relay UE list.

Below, the example in FIGS. 10a and 10b is described, focusing on the differences between FIGS. 10a and 10b and FIGS. 9a and 9b.

Step 0~1: Performed in the same manner as step 0~1 in FIG. 9a and FIG. 9b.

Step 2: Based on the measurement result received from the remote UE in Step 1, the Source gNB may determine to handover the remote UE to target gNB #1. The Source gNB may determine the target path type. For example, the Source gNB may decide whether the Remote UE should use a direct path via the Uu cell of Target gNB #1 or an indirect path via a Relay UE located within the cell of Target gNB #1. The examples in FIGS. 10a and 10b illustrate examples where the Source gNB decided to serve the remote UE via an indirect path at Target gNB #1.

NOTE: The order in which the source gNB determines the target gNB, target cell, and target path type is up to the gNB implementation.

Step 3: Performed in the same manner as step 3 in FIG. 9a and FIG. 9b.

Step 4: Target gNB #1 may select a target relay UE. Target gNB #1 supports inter-gNB path switching for the remote UE. Target gNB #1 can understand/execute the IE that includes the list of candidate relay UE(s) within the HANDOVER REQUEST message. Therefore, Target gNB #1 may perform the operation of selecting a relay UE from the list of candidate relay UE(s) received in Step 3 to support DL/UL data transmission for the remote UE. However, Target gNB #1 may fail to select a target relay from the list of candidate relay UE(s) for reasons such as: the RRC state of the candidate relay UE being RRC_IDLE/RRC_INACTIVE; the load of each candidate relay UE being too severe to service the remote UE effectively; or the Uu link quality between the candidate relay UE and Target gNB #1 being poor.

Step 5: If Target gNB#1 fails to select a target relay in Step 4, Target gNB #1 may stop the handover procedure for the remote UE. Target gNB#1 may inform the source gNB that the handover procedure has been stopped by transmitting a HANDOVER PREPARATION FAILURE message to the source gNB. In this case, Target gNB #1 may include a cause value or indication within the HANDOVER PREPARATION FAILURE message to indicate that Target gNB #1 failed to select a target relay based on the list of candidate relay UEs. Alternatively, Target gNB #1 may include a cause value or indication within the HANDOVER PREPARATION FAILURE message to indicate that none of the relay UEs in the candidate relay UE list are suitable, from the perspective of Target gNB #1, to serve the remote UE.

Step 6: Based on the cause value or indication received in Step 5, the source gNB may again perform one or more of the following: target gNB selection, target cell selection, or target path type selection (e.g., Step 2). As a result, the source gNB may execute one or more of the following:
(a) The source gNB may determine a new target gNB based on that the source gNB recognizes that handover to Target gNB #1 is impossible. For example, i) when direct path switching to Target gNB #1 is impossible (e.g., when none of the Uu cells belonging to Target gNB#1 provide adequate radio quality, or when the cell cannot support the S-NSSAI for the remote UE, making the source gNB impossible to select a Uu cell belonging to Target gNB#1 as the target), or ii) when it is difficult to configure a new list of candidate relay UE(s) other than the list configuration/determined in Step 3 for indirect path switching to Target gNB #1. In this case, the source gNB may determine that handover to Target gNB#1 is impossible and select a new target gNB.
(b) The source gNB maintains the handover to Target gNB #1 but may determine to perform direct path switching. For example, while it is difficult to configure a new list of candidate relay UE(s) other than the list configured/determined in Step 3 for indirect path switching to Target gNB#1, a suitable cell may exist among the Uu cells belonging to Target gNB#1 to serve the Remote UE. In this case, the source gNB may determine that cell as the target cell and notify Target gNB#1 of direct path switching (i.e., legacy handover).
(c) The source gNB maintains the handover decision and indirect path switching decision to Target gNB #1 but may newly select a target cell and/or candidate relay UE list. For example, the source gNB may configure/determine a new list of candidate relay UE(s) in addition to the list configured/determined in Step 3. For example, the source gNB may determine that serving the Remote UE via a Relay UE belonging to that list is preferable to serving the Remote UE via a Uu cell belonging to target gNB#1, or via a Uu cell belonging to another nearby gNB, or via a candidate relay UE. Such cases may include, for example, when the radio quality of the PC5 link between the Remote UE and the Candidate relay UE is better, or when the radio quality of the Uu link is poor if connecting the Remote UE via a direct path through the Uu cell. The source gNB maintains the handover decision to Target gNB #1 and the indirect path switching decision, but may newly select the target cell and/or the candidate relay UE list.

Alternatively, if a HANDOVER PREPARATION FAILURE message is received from Target gNB#1 as in Step 5, it is also possible to execute (a), (b), or (c) immediately based on the source gNB implementation or the operator's pre-configuration.

In the examples of FIGS. 10a and 10b, it is assumed that the Source gNB determined in Step 6 to serve the remote UE via an indirect path from Target gNB #2.

Step 7: The Source gNB may transmit a HANDOVER REQUEST message including a list of candidate relay UE(s) to Target gNB #2. For example, based on the measurement result received from the remote UE in Step 1, the Source gNB may determine a list of candidate relay UE(s) that can be utilized as an indirect path at Target gNB #2. The Source gNB transmits a HANDOVER REQUEST message that includes the list of candidate relay UE(s) to Target gNB #2.

NOTE: Depending on the result of Step 6, the HANDOVER REQUEST message may be forwarded to Target gNB #1 instead of Target gNB #2.

Step 8: Target gNB #2 may select a target relay UE. Target gNB #2 may support inter-gNB path switching for remote UEs. Target gNB #2 may understand/perform the IE that includes the list of candidate relay UE(s) within the HANDOVER REQUEST message. Therefore, Target gNB #2 may select a relay UE from the list of candidate relay UE(s) received in Step 7 to assist in DL/UL data transmission for the respective remote UE.

Step 9: Target gNB #2 may transmit the information required for the relay UE selected in Step 8 to serve the remote UE to the selected relay UE via the RRC Reconfiguration procedure.

Step 10: Target gNB #2 may transmit a HANDOVER REQUEST ACK message to the source gNB. For example, a HANDOVER REQUEST ACK message that includes an RRC Reconfiguration message, which includes the information necessary for the Remote UE to access Target gNB #2 via the relay UE selected in Step 8, may be transmitted to the source gNB.

Step 11: The source gNB forwards the RRC Reconfiguration message received in Step 10 to the remote UE.

Step 12: The source gNB transmits an SN STATUS TRANSFER message to Target gNB #2.

Step 13: The Remote UE establishes a PC5 connection with the relay UE based on the RRC Reconfiguration message received in Step 11.

Step 14: The Remote UE generates an RRC Reconfiguration Complete message in response to the RRC Reconfiguration message received in Step 11. The Remote UE may complete the handover procedure by transmitting the RRC Reconfiguration Complete message to Target gNB #2 via the relay UE.

Step 15: This step may be performed in the same manner as step 14 in the examples of FIGS. 9a and 9b.

The examples of FIGS. 9a and 9b and the examples of FIGS. 10a and 10b described above illustrate operations based on inter-gNB direct-to-indirect path switching. However, these are merely examples, and the scope of the present disclosure is not limited to inter-gNB direct-to-indirect path switching. Various examples of the present disclosure are also applicable to inter-gNB indirect-to-indirect path switching situations.

Hereinafter, various examples of the disclosure of the present specification will be described.

According to prior arts, a list of candidate relay UE(s) was introduced via XnAP and NGAP. However, it was not determined whether the list of candidate relay UE(s) was an ordered list. Furthermore, considering gNBs that do not support service continuity for U2N relays, the criticality of this new IE (i.e., the list of candidate relay UEs) needs further discussion. Additionally, the overall procedure for path switching between gNBs should be further reflected.

It describes details regarding the list of candidate relay UEs.

In the prior arts, it was not determined whether the list of candidate relay UE(s) was a ordered list based on the measurement reports of the remote UE for the candidate relay UEs. When the source gNB provides measurement information of the remote UE to the target gNB, the target gNB may make a better decision based on the full knowledge of the relay UE (e.g., the PC5 measurement result of the candidate relay UE at the source gNB, the Uu measurement result of the candidate relay UE, the current RRC state and load state of the candidate relay UE). However, it was decided not to further discuss whether the source gNB provides measurement results for the list of candidate relay UE(s) to the target gNB.

However, even if the source gNB does not provide the remote UE's measurement results to the target gNB, the list of candidate relay UE(s) ordered by the source gNB may still assist the target gNB in determining the target relay selection. Typically, the target gNB selects the target relay from the source gNB's candidate relay list based on multiple criteria, such as at least one of the signal strength of the Uu link (e.g., the link between the remote UE and the target gNB), the current RRC state of the candidate relay UE, or its load state, etc. If candidate relay UE(s) in the list share similar aspects (e.g., similar Uu link signal strength and identical RRC state), the target gNB may consider the order provided by the source gNB when making the final decision. Based on the remote UE's PC5 measurement results, if the source gNB specifies the order of candidate relay UEs, it is assumed that the target gNB may select the candidate relay UE with the best signal strength on the PC5 link (e.g., the link between the remote UE and the relay UE). Therefore, providing the target gNB with an ordered list of candidate relay UE(s) may be advantageous.

Example 1 of the Proposal: The list of candidate relay UE(s) may be an ordered list based on the remote UE's measurement report for the candidate relay UEs.

The Candidate Relay UE Information List IE may be introduced in the XnAP handover request message. According to prior arts, the criticality of this new IE (i.e., the Candidate Relay UE Information List IE) is "ignore".

Therefore, if the source gNB transmits this candidate relay UE information list IE to a target gNB that does not support service continuity for U2N relay, the target gNB ignores this IE. In this case, even if the source gNB determines to perform path switching from a direct path to an indirect path or from one indirect path to another, the target gNB has the problem of performing a handover to the direct cell rather than to the target relay UE. Because the decision result related to target relay selection (e.g., the selected relay UE ID) is not included in the XnAP HANDOVER REQUEST ACKNOWLEDGE message, the source gNB cannot recognize the handover to the direct cell.

Therefore, to prevent such issues, the present disclosure proposes the criticality of the Candidate Relay UE Information List IE set to "reject". Similar to the XnAP case, the criticality of the Candidate Relay UE Information List IE in the Source NG-RAN Node-Target NG-RAN Node Transparent Container IE is set to "reject".

Example 2 of the Proposal: The criticality of the Candidate Relay UE Information List IE included in the XnAP handover request message is set to "reject". The criticality of the Candidate Relay UE Information List IE included in the transparent container IE transmitted via NGAP from the source NG-RAN node to the target NG-RAN node is set to "reject".

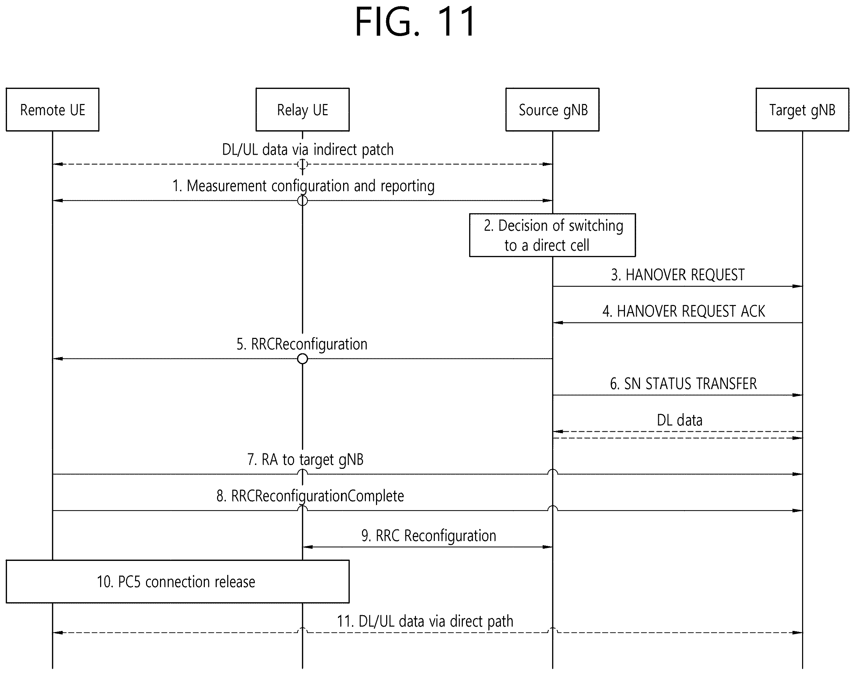

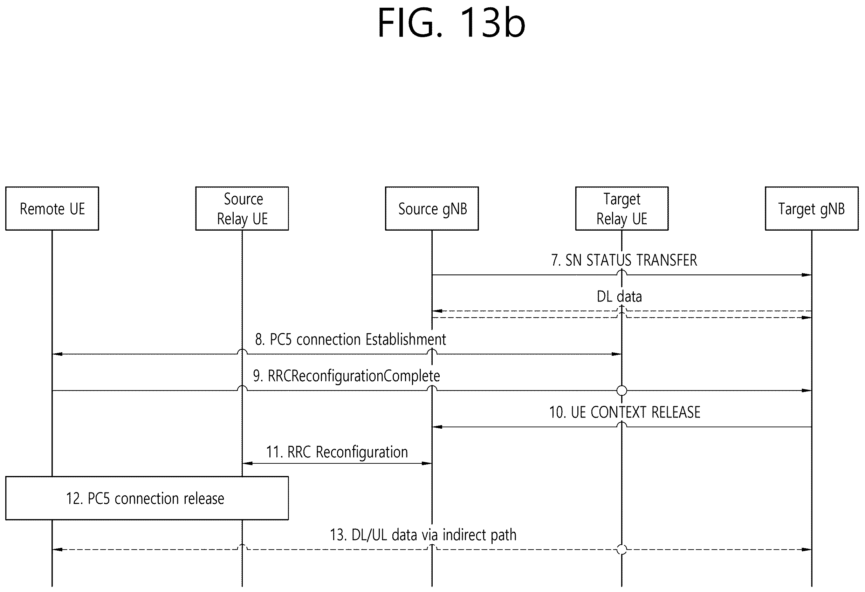

Below, with reference to the examples in FIGS. 11 through 13a and FIG. 13b, the procedure for supporting service continuity will be described.

The overall procedure for supporting L2 U2N service continuity is described.

For the inter-gNB path switch cases (i.e., Scenario A, B and D), RAN3 can capture the overall procedures to support the Rel-18 service continuity for L2 U2N relay in TS 38.300 based on the initial version of a running CR to TS 38.300 in RAN2.

For cases involving path switching between networks (i.e., Scenarios A, B, and D), the entire procedure to support service continuity may be reflected. Here, Scenarios A through D are the same as the previously described Scenarios A through D:
A. Inter-gNB indirect-to-direct path switching (i.e., switching from "remote UE <-> relay UE A <-> gNB X" to "remote UE <-> gNB Y")
B. Inter-gNB direct-to-indirect path switching (i.e., switching from "remote UE <-> gNB X" to "remote UE <-> relay UE A <-> gNB Y")
C. Intra-gNB indirect-to-indirect path switching (i.e., switching from "remote UE <-> relay UE A <-> gNB X" to "remote UE <-> relay UE B <-> gNB X")
D. Inter-gNB indirect-to-indirect path switching (i.e., switching from "remote UE<-> relay UE A <-> gNB X" to "remote UE <-> relay UE B <-> gNB Y")

Example 3 of the proposal: The entire procedure for inter-network path switching (i.e., Scenarios A, B, and D) may be reflected in TS 38.300.

When a U2N Remote UE switches from an indirect path to a direct path with an inter-gNB change (e.g., Scenario A), it is judged that there will be no significant F1 impact. In such cases, a procedure as shown in the example of FIG. 11 may be performed.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 11** **illustrates a procedure supporting service continuity for path switching from an indirect path to a direct path between inter-gNBs according to an embodiment of the present disclosure.**

The Remote UE communicates with the source gNB via an indirect path through the source relay UE.
1. Uu measurement configuration and measurement reporting signaling is performed. For example, the remote UE performs measurements for the target gNB and then reports them to the source gNB.
2. The source gNB decides to switch the communication path of the L2 U2N remote UE to the direct cell of the target gNB.
3. The source gNB transmits a handover request message to the target gNB to deliver a transparent RRC container that includes the information required for the target side to prepare for the handover.
4. The target gNB prepares the handover at L1/L2 and transmits a Handover Request Acknowledge message to the source gNB. This message includes a transparent container to be transmitted to the UE via RRC messages for performing the handover.
5. The source gNB triggers a Uu handover by transmitting an RRCReconfiguration message to the L2 U2N Remote UE. Upon receiving the RRCReconfiguration message that includes the path switching configuration, the L2 U2N Remote UE ceases User Plane (UP) and Control Plane (CP) transmission via the L2 U2N Relay UE.
6. The source gNB transmits an SN STATUS TRANSFER message to the target gNB.
7. The remote UE may perform a Random Access (RA) procedure for the target gNB.
8. The remote UE transmits an RRCConfigurationComplete message to the target gNB.
9. The Relay UE and Source gNB perform RRC reconfiguration.
10. The remote UE releases the PC5 connection.
11. The remote UE and target gNB exchange DL and UL data via a direct path.

Example 4 of the Proposal: The entire procedure of FIG. 11 may be applied as a criterion to support switching from an indirect path to a direct path.

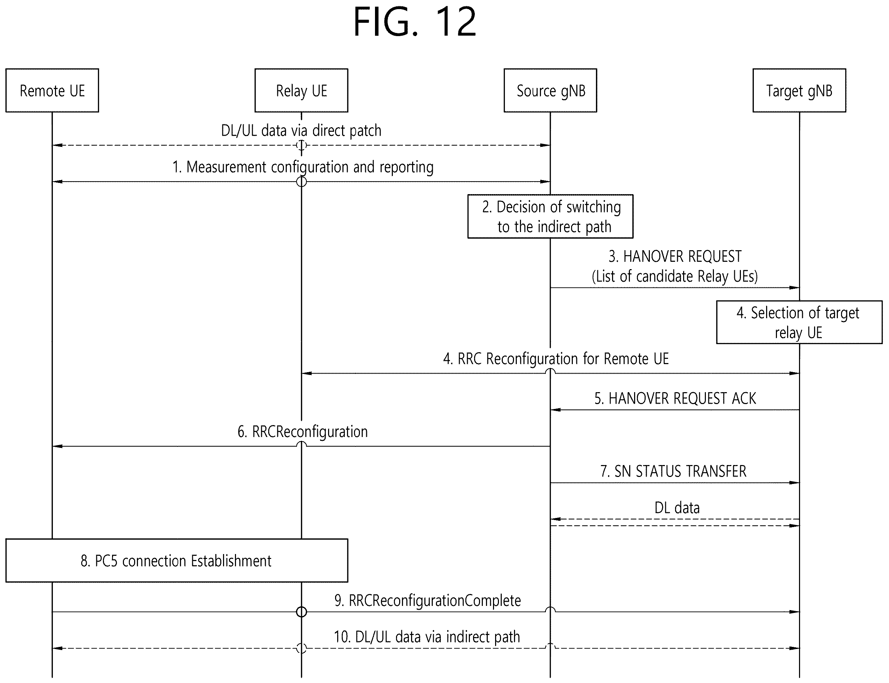

For U2N remote UEs, when transitioning to an inter-gNB indirect path (e.g., from direct path to indirect path, or from indirect path to indirect path) (i.e., Scenarios B and D), the target gNB configures the indirect path via the target relay UE. A transition from a direct path to an indirect path that includes a gNB-DU change may be reused with the Xn handover procedure. In this scenario, based on information received from the source gNB-CU, the target gNB-CU assigns a remote UE local ID. The entire procedure for the U2N Remote UE transitioning from a direct path to an indirect path may be described as illustrated in FIG. 12.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 12** **illustrates a procedure supporting service continuity for path switching from a direct path to an indirect path between inter-gNBs according to an embodiment of the present disclosure.**

The Remote UE is communicating with the source gNB based on a direct path.
1. To evaluate both relay link measurements and Uu link measurements, Uu measurement configuration and measurement reporting signaling are performed between the U2N Remote UE and the source gNB-CU. After the U2N Remote UE measures/discovers candidate U2N relay UEs, the U2N Remote UE may report Uu measurement results to one or more candidate U2N relay UEs.
2. The source gNB determines to switch the communication path of the L2 U2N remote UE to an indirect path with one of the candidate target U2N relay UEs serving in the same target cell under the target gNB.
NOTE: The candidate U2N relay UE IDs in the list may be sorted, for example, based on the measurement report of the U2N remote UE for the candidate U2N relay UE.
4. If possible, the target gNB determines indirect path switching to the target U2N relay UE among the candidate target relay UEs. The target gNB allocates a local ID to the U2N remote UE. Then, the target gNB transmits an RRCReconfiguration message to the target L2 U2N Relay UE. This message includes at least one of the local ID and L2 ID of the L2 U2N Remote UE, the Uu and PC5 Relay RLC channel configuration for relaying, or the bearer mapping configuration.
5. The target gNB transmits a handover request approval message including an RRCReconfiguration message to the source gNB. The RRCReconfiguration message content may include at least one of path switch configuration, PC5 RLC channel configuration for relay traffic, bearer mapping, or related radio bearers.
6. The source gNB may transmit the RRCReconfiguration message to the Remote UE.
7. The source gNB transmits an SN STATUS TRANSFER message to the target gNB.
8. The Remote UE may establish a PC5 connection with the Relay UE.
9. The Remote UE may transmit an RRCReconfiguration Complete message to the Target gNB.
10. The Remote UE may exchange DL data and UL data with the Target gNB based on the indirect path via the Relay UE.

Example 5 of the Proposal: As an example of criteria for supporting transition from direct to indirect path, the entire procedure of FIG. 12 may be applied.

Following the inter-gNB direct-to-indirect path transition procedure of FIG. 12, the inter-gNB indirect-to-indirect path transition procedure may be described as follows.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

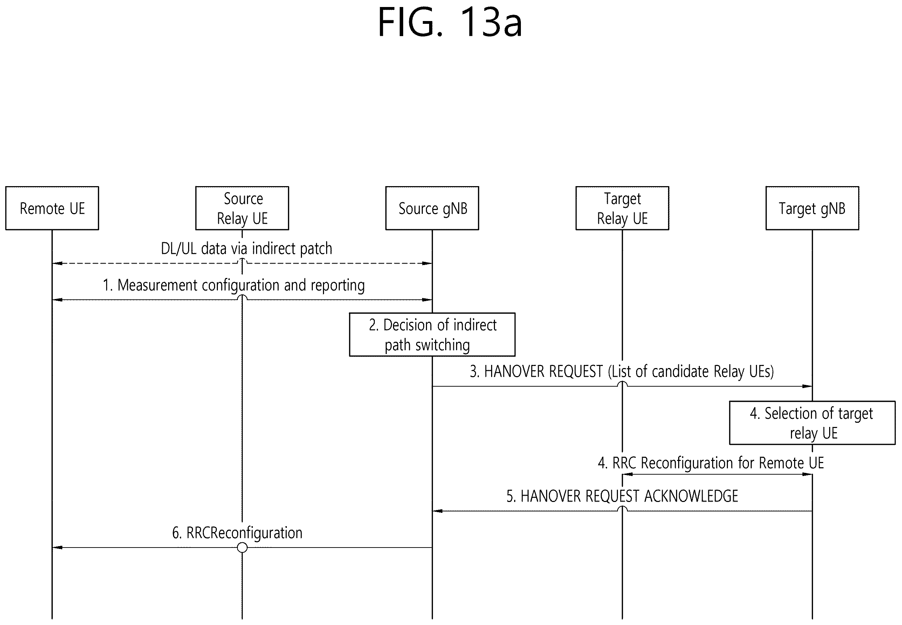

**FIG. 13a** **and** **FIG. 13b** **illustrate a procedure supporting service continuity during path switching from an indirect path to a direct path between inter-gNBs according to an embodiment of the present disclosure.**

The Remote UE communicates with the source gNB via an indirect path through the source relay UE.
1. Uu measurement configuration and measurement reporting signaling are performed between the U2N Remote UE and the source gNB-CU to evaluate both relay link measurements and Uu link measurements. After the U2N Remote UE measures/discovers candidate U2N relay UEs, the U2N Remote UE may report Uu measurement results to one or more candidate U2N relay UEs.
2. The source gNB determines to perform an indirect path handover to one of the candidate target U2N relay UEs serving the same target cell within the target gNB via the indirect path of the L2 U2N remote UE.
3. The source gNB transmits a HANDOVER REQUEST message to the target gNB. The handover request message may include additional information related to the list of candidate target U2N relay UEs.
   NOTE: The candidate U2N relay UE IDs in the list may be ordered, for example, based on measurement reports from the U2N remote UE for the candidate U2N relay UEs.
4. Where possible, the target gNB makes determines indirect path switching to the target U2N relay UE among the candidate target relay UEs. The target gNB then transmits an RRCReconfiguration message to the target L2 U2N Relay UE. This message includes at least one of the local ID and L2 ID of the L2 U2N Remote UE, the Uu and PC5 Relay RLC channel configuration for relaying, or the bearer mapping configuration.
5. The target gNB transmits a handover request approval message including the RRCReconfiguration message to the source gNB. The contents of the RRCReconfiguration message may include at least one of the path switch configuration, the PC5 RLC channel configuration for relay traffic, the bearer mapping, or the associated radio bearer.
6. The source gNB may transmits an RRCReconfiguration message to the Remote UE.
7. The source gNB transmits an SN STATUS TRANSFER message to the target gNB.
8. The Remote UE may establish a PC5 connection with the target Relay UE.
9. The Remote UE transmits an RRCReconfiguration Complete message to the target gNB.
10. The target gNB transmits a UE CONTEXT RELEASE message to the source gNB.
11. The Relay UE and Source gNB perform an RRC reconfiguration.
12. The Remote UE releases the PC5 connection.
13. The Remote UE and target gNB exchange DL and UL data via an indirect path through the target relay UE.

Example 6 of the Proposal: The entire procedure in FIG. 13a and FIG. 13b may be used as an example to support switching from an indirect path to an indirect path.

Below, an example of switching from an indirect path to a direct path is described.

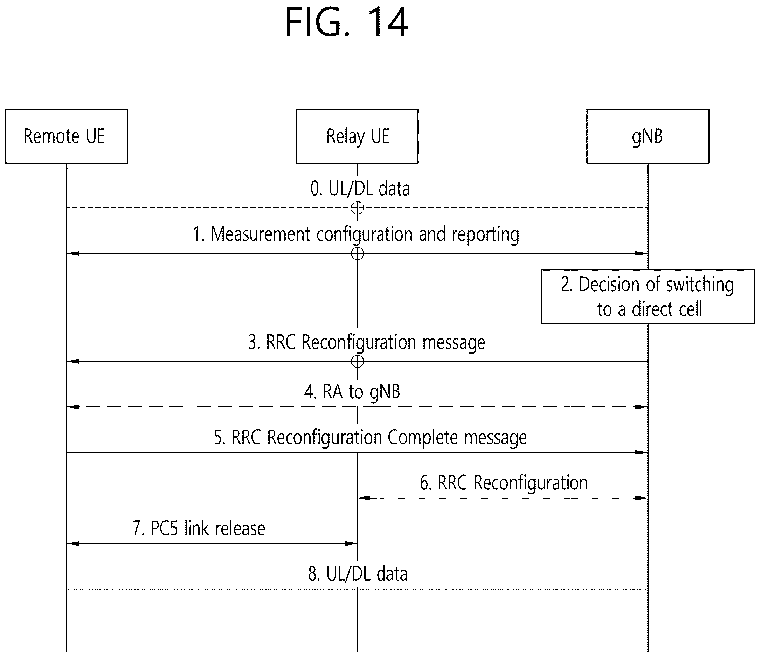

For service continuity of the L2 U2N relay, the procedure according to the example in FIG. 14 is used when the L2 U2N remote UE switches to a direct path:

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 14** **is an example of a procedure for switching from an indirect path to a direct path according to an embodiment of the present disclosure.**

FIG. 14 illustrates an example of a procedure for switching the indirect path of an L2 U2N remote UE to a direct path based on a direct Uu cell.
0. The remote UE exchanges UL data and DL data with the gNB based on the indirect path via the relay UE.
1. Uu measurement configuration and measurement reporting signaling procedures are performed to evaluate both relay link measurements and Uu link measurements. When the configuration measurement reporting criteria are met, the L2 U2N remote UE reports the measurement results. The sidelink relay measurement report may include at least one of the source L2 ID of the L2 U2N relay UE, the serving cell ID (i.e., NCGI/NCI), or the sidelink measurement quantity result. The quantity of the sidelink measurement may be the SL-RSRP of the serving L2 U2N relay UE; if SL-RSRP is unavailable, SD-RSRP is used.
2. The gNB determines to switch the L2 U2N remote UE's indirect path to a direct Uu path.
3. The gNB transmits an RRCReconfiguration message to the L2 U2N remote UE. After receiving the RRCReconfiguration message that includes the path switch configuration, the L2 U2N remote UE stops transmitting UP and CP via the L2 U2N relay UE.
4. The L2 U2N remote UE synchronizes with the gNB and performs a random access.
5. The UE (e.g., the L2 U2N Remote UE from the previous step) transmits an RRCReconfigurationComplete message to the gNB via the direct path, using the configuration provided in the RRCReconfiguration message. From this step onward, the UE (e.g., the L2 U2N remote UE from the previous step) uses the RRC connection to the gNB via the direct path.
6. The gNB transmits an RRCReconfiguration message to the L2 U2N Relay UE to reconfigure the connection between the gNB and the L2 U2N Relay UE. The RRCReconfiguration message for the L2 U2N Relay UE can be transmitted at any time after Phase 3, depending on the gNB implementation (e.g., to release the Uu and PC5 Relay RLC channels for the relay, to configure the bearer mapping related to the L2 U2N Remote UE).
7. The AS layer of an L2 U2N Relay UE or L2 U2N Remote UE may release the PC5-RRC connection and instruct the upper layer to release the PC5 unicast link after receiving an RRCReconfiguration message from the gNB. The timing for executing the link release varies depending on the UE implementation.
8. The data path between the UE (e.g., the former L2 U2N Remote UE) and the gNB transitions from an indirect path to a direct path. If in configuration by the gNB, PDCP reconfiguration or PDCP data recovery is performed by the UE (e.g., the former L2 U2N Remote UE) on the uplink during the path transition to ensure lossless transmission.

NOTE: Step 8 can be executed at any time after Step 4. Step 8 is independent of Steps 6 and 7.

When the indirect path of an L2 U2N remote UE switches to a direct path, the procedure described in the example of FIG. 11 may be used to ensure service continuity for the inter-gNB L2 U2N relay.

Below, path switching from a direct path to an indirect path is described.

The gNB may select an L2 U2N relay UE in any RRC state (e.g., RRC_IDLE, RRC_INACTIVE, or RRC_CONNECTED) as the target L2 U2N relay UE for switching the remote UE's path from a direct path to an indirect path.

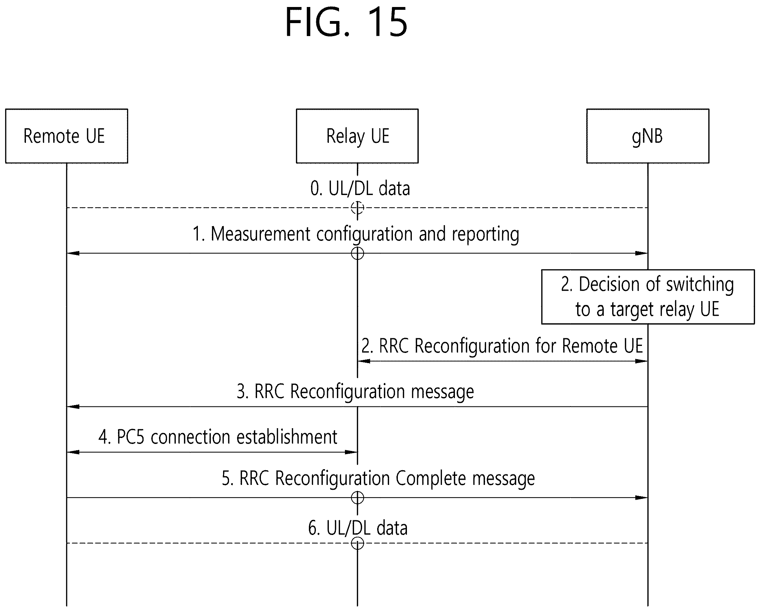

To ensure service continuity for the L2 U2N remote UE, the procedure shown in FIG. 15 is used when the direct path of the L2 U2N remote UE switches from RRC _CONNECTED to an indirect path via the L2 U2N relay UE:

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 15** **illustrates a procedure for switching the direct path of a remote UE in the RRC_CONNECTED state to an indirect path according to an embodiment of the present disclosure.**

FIG. 15 illustrates an example procedure where the direct path of an L2 U2N remote UE in the RRC_CONNECTED state is switched to an indirect path via an L2 U2N relay UE.
1. After the L2 U2N remote UE measures/discovers candidate L2 U2N relay UEs, the L2 U2N remote UE reports measurements and Uu measurements for one or more candidate L2 U2N relay UEs:
   - The L2 U2N Remote UE filters appropriate L2 U2N Relay UEs according to relay selection criteria before reporting. The L2 U2N remote UE reports only L2 U2N relay UE candidates that satisfy the higher-layer criteria;
   - The report may include at least one of the L2 U2N relay UE ID, the serving cell ID of the L2 U2N relay UE, or the sidelink measurement quantity information. SD-RSRP is used as the sidelink measurement quantity.
2. The gNB determines to switch the direct path of the L2 U2N Remote UE to an indirect path via the target L2 U2N Relay UE. The gNB then transmits an RRCReconfiguration message to the target L2 U2N Relay UE. The RRCReconfiguration message includes at least the local ID and L2 ID of the L2 U2N Remote UE, the Uu and PC5 Relay RLC channel configuration for the relay, and the bearer mapping configuration.
3. The gNB transmits an RRCReconfiguration message to the L2 U2N Remote UE. The RRCReconfiguration message includes at least one of the L2 U2N Relay UE ID, the Remote UE's local ID, the PC5 Relay RLC channel configuration for relay traffic, or the related end-to-end radio bearer(s). Upon receiving the RRCReconfiguration message from the gNB, the L2 U2N Remote UE stops UP and CP transmission via the direct path.
4. The L2 U2N remote UE establishes a PC5 RRC connection with the target L2 U2N relay UE.
5. The L2 U2N remote UE transmits an RRCRecfigurationComplete message to the gNB via the L2 U2N relay UE, completing the path handover procedure.
6. The data path is switched from the direct path to the indirect path between the L2 U2N remote UE and the gNB.

If the selected L2 U2N Relay UE is in the RRC_IDLE state or RRC_INACTIVE state for switching from a direct path to an indirect path, the L2 U2N Remote UE configures a PC5 link with the L2 U2N Relay UE after receiving the path switch command. The L2 U2N Remote UE triggers the L2 U2N Relay UE to enter the RRC _CONNECTED state by transmitting an RRCReconfigurationComplete message via the L2 U2N Relay UE.

For reference, the procedure for an L2 U2N Remote UE to switch to an indirect path, as shown in the example of FIG. 15, may also apply when the selected L2 U2N Relay UE for path switching from a direct path to an indirect path is in the RRC_IDLE or RRC_INACTIVE state. In this case, the same operation may be performed, except that after the L2 U2N Relay UE enters the RRC_CONNECTED state between steps 4 and 5, the gNB transmits an RRCRecfiguration message to the L2 U2N Relay UE.

When the path of an L2 U2N Remote UE in the RRC_CONNECTED state switches from a direct path to an indirect path via an L2 U2N Relay UE, the procedure described in the example of FIG. 12 is used to ensure service continuity between inter-gNBs.

For path switching from an indirect path to another indirect path, the following description applies. For service continuity of the L2 U2N Remote UE between inter-gNBs, when the indirect path of the L2 U2N Remote UE switches from RRC _CONNECTED to an inter-gNB indirect path via the L2 U2N Relay UE, the procedure described in the examples of FIGS. 13a and 13b is used.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

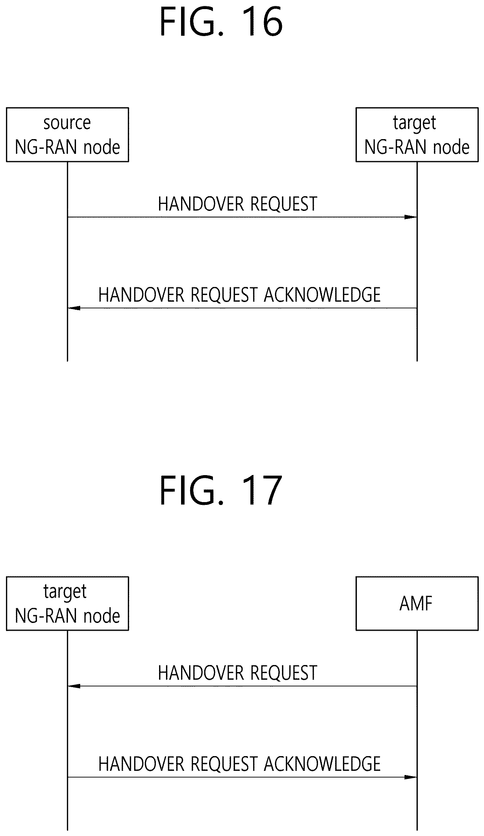

**FIG. 16** **illustrates an example of performing a handover preparation procedure according to an embodiment of the present disclosure.**

FIG. 16 illustrates an example of a handover preparation procedure. According to the example in FIG. 16, the source NG-RAN node may transmit a handover request message to the target NG-RAN node. If the handover request is successful, the target NG-RAN node may transmit a handover request approval message to the source NG-RAN node.

The source NG-RAN node initiates the procedure by transmitting a HANDOVER REQUEST message to the target NG-RAN node. Upon transmitting the handover request message, the source NG-RAN node may start the T_{XnRELOCprep} timer.

If the Candidate Relay UE Info List IE is included in the HANDOVER REQUEST message, the target NG-RAN node shall, if supported, use it to configure the path switch to indirect path as specified in TS 38.300 [9].

Candidate Relay UE Information List IE, if included in the handover request message, and if the target NG-RAN node supports the Candidate Relay UE Information List IE, the target NG-RAN node may configure path switching to the indirect path based on the Candidate Relay UE Information List IE.

Below, the HANDOVER REQUEST message transmitted by the source NG-RAN node to the target NG-RAN node is described. The handover request message is transmitted from the source NG-RAN node to the target NG-RAN node to request resource preparation for the handover. The handover request message may include, for example, Information Elements (IE) such as those shown in Table 3.

**[Table 3]**

| IE/Group Name | Presence | Range | IE type and reference | Semantics description | Criticality | Assig ned Critic ality |
|---|---|---|---|---|---|---|
| 5G ProSe PC5 QoS Parameters | O | | 9.2.3.160 of TS 38.423 V17.3.0 | This IE applies only when the UE is allowed for the 5G ProSe service. | YES | ignore |
| Candidate Relay UE Info List | O | | 9.2.3.x of TS 38.423 V17.3.0 (For example, x could be 188 days) | | YES | reject |

According to the example in Table 3, the handover request message may include a Candidate Relay UE Info List. As proposed in various examples of the present disclosure, the criticality of the Candidate Relay UE Info List may be set to reject. For reference, the Candidate Relay UE Info List is included in the 5G ProSe PC5 QoS Parameters, and the 5G ProSe PC5 QoS Parameters may also be included in the handover request message.

The Candidate Relay UE Info List includes the IDs of candidate relay UE(s) when the source NG-RAN decides to switch the UE to the target NG-RAN via an indirect path. Table 4 below is an example of the Candidate Relay UE Info List.

**[Table 4]**

| IE/Group Name | Presence | Range | IE type and reference | Semantics description |
|---|---|---|---|---|
| Candidate Relay UE Info Item | | 1..<maxnoofCan didateRelayUEs > | | |
| >Candidate Relay UE ID | M | | BIT STRING(SIZE(24)) | Includes the SL-SourceIdentity for the candidate relay UE. |

For example, a handover request message may include UEContextInfoHORequest ID information. UEContextInfoHORequest may include UEHistoryInformation ID information. UEHistoryInformation may include NoPDUSessionIndication ID information. NoPDUSessionIndication may include TimeSynchronizationAssistanceInformation UD information. TimeSynchronizationAssistanceInformation may include FiveGProSePC5QoSParameters ID information. FiveGProSePCSQoSParameters may include CandidateRelayUEInfoList ID information. The criticality of CandidateRelayUEInfoList may be assigned as reject.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 17** **illustrates an example of handover resource allocation according to an embodiment of the present disclosure.**

According to FIG. 17, the AMF may transmit a handover request message to the target NG-RAN node. The target NG-RAN node may transmit a handover request acknowledge message to the AMF. The AMF may initiate the handover resource allocation procedure by transmitting a handover request message to the target NG-RAN node.

The Candidate Relay UE Information List IE may be included within the Source NG-RAN Node to Target NG-RAN Node Transparent Container IE in the handover request message. In this case, if the target NG-RAN node supports the Candidate Relay UE Information List IE, the target NG-RAN node may configure a path switch to the indirect path based on the Candidate Relay UE Information List IE.

Below, an example of a Transparent Container transmitted by the source NG-RAN node to the target NG-RAN node is described. This IE is generated at the source NG-RAN node and transmitted to the target NG-RAN node. For inter-system handover to 5G, the IE is transmitted from the external handover source to the target NG-RAN node. This IE is transparent to the 5GC.

**[Table 5]**

| IE/Group Name | Presence | Range | IE type and reference | Semantics description | Criticality | Assigned Criticality |
|---|---|---|---|---|---|---|
| NGAP IE Support Information Request List | | 0..1 | | | YES | ignore |
| >NGAP IE Support Information Request Item | | 1..<maxno ofIESuppor tInfo> | | | - | |
| >>NGAP Protocol IE-Id | M | | 9.3.1.239 | | - | |
| Candidate Relay UE Information List | | 0..1 | | | YES | reject |
| >Candidate Relay UE Information Item | | 1..<maxno of Candidat eRelayUEs > | | | - | |
| >>Candidate Relay UE ID | M | | BIT STRING (SIZE(24)) | Includes the SL-SourceIdentity for the candidate relay UE. | - | |

According to the example in Table 5, the Source NG-RAN Node to Target NG-RAN Node Transparent Container may include a Candidate Relay UE Info List. As proposed in various examples of the present disclosure, the criticality of the Candidate Relay UE Info List may be set to reject. The Candidate Relay UE Info List may include a Candidate Relay UE Info Item and a Candidate Relay UE ID.

For reference, SourceNGRANNode-ToTargetNGRANNode-TransparentContainer may include an NGAPIESupportInformationRequestList. An NGAPIESupportInformationRequestList may include a CandidateRelayUEInformationList.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

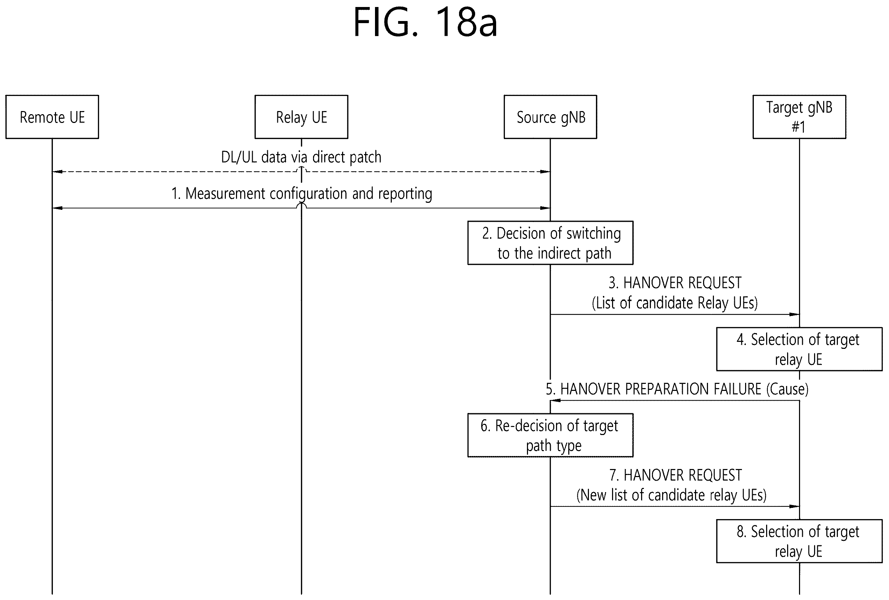

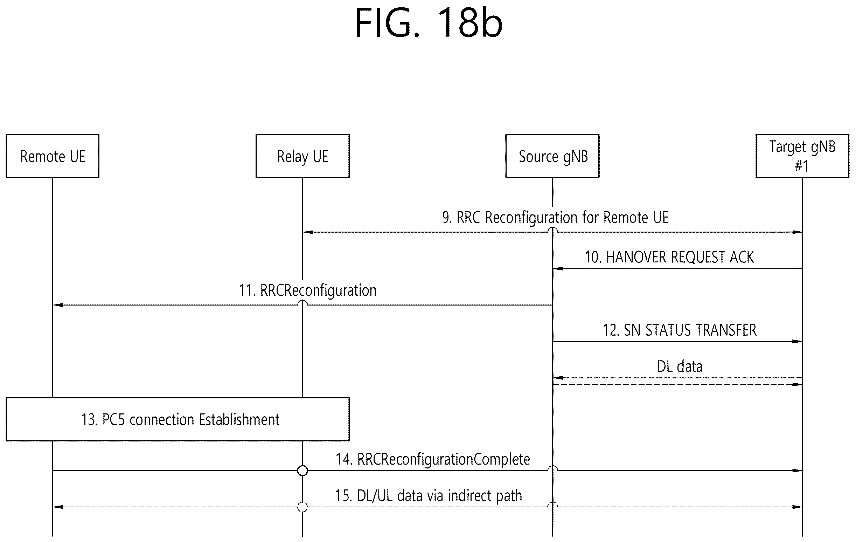

**FIGS. 18a** **and** **18b** **illustrate an example of a procedure for the source gNB to reselect a list of target cells and/or candidate relay UE(s) according to an embodiment of the present disclosure.**

FIG. 18a and FIG. 18b illustrate an example where the Target gNB may support inter-gNB path switching for remote but cannot select a target relay UE capable of servicing the remote UE from the list of candidate relay UE(s) sent by the source gNB. In such cases, the Target gNB may quickly notify the source gNB that it cannot select a target relay UE. The Target gNB enables the source gNB to determine a new Target gNB, Target cell, Target path type, or candidate relay UE list.

Step 0: The Remote UE is transmitting DL/UL data via the Source gNB.

Step 1~2: May be performed in the same manner as steps 1~2 in FIG. 9a and FIG. 9b.

NOTE: The order in which the Source gNB determines the target gNB, target cell, and target path type is a gNB implementation detail.

Step 3: May be performed in the same manner as step 3 in FIG. 9a and FIG. 9b.

Step 4: Target gNB #1 may understand/perform the IE that includes the list of candidate relay UE(s) within the HANDOVER REQUEST message because Target gNB #1 can support Rel-18 inter-gNB path switching for remote UEs. Therefore, Target gNB #1 intends to finally select the relay UE from the list of candidate relay UE(s) received in Step 3 that will assist in DL/UL data transmission for the remote UE. However, Target gNB #1 may fail to select a target relay from the list of candidate relay UE(s) for any of the following reasons: the RRC state of the candidate relay UE is RRC_IDLE/RRC_INACTIVE; the load of each candidate relay UE is severe, making it difficult to service the remote UE; or the Uu link quality between the candidate relay UE and Target gNB #1 is poor.

Step 5: If Target gNB#1 fails to select a target relay in Step 4, Target gNB#1 may stop the handover procedure for the remote UE. Target gNB#1 can inform the source gNB that the handover procedure has been stopped by transmitting a HANDOVER PREPARATION FAILURE message to the source gNB. In this case, Target gNB #1 may include a cause value or indication within the HANDOVER PREPARATION FAILURE message to indicate that Target gNB #1 failed to select a target relay based on the list of candidate relay UEs. Alternatively, Target gNB #1 may include a cause value or indication within the HANDOVER PREPARATION FAILURE message stating that none of the relay UEs in the candidate relay UE list are suitable for servicing the remote UE from the perspective of Target gNB #1.

Step 6: Based on the cause value or indication received in Step 5, the source gNB may again perform one or more of the following: target gNB selection, target cell selection, or target path type selection (e.g., Step 2). As a result, the source gNB may execute one or more of the following:
(a) The source gNB may determine a new target gNB based on that the source gNB recognizes that handover to Target gNB #1 is impossible. For example, i) when direct path switching to Target gNB #1 is impossible (e.g., when none of the Uu cells belonging to Target gNB#1 provide adequate radio quality, or when the cell cannot support the S-NSSAI for the remote UE, making the source gNB impossible to select a Uu cell belonging to Target gNB#1 as the target), or ii) when it is difficult to configure a new list of candidate relay UE(s) other than the list configuration/determined in Step 3 for indirect path switching to Target gNB #1. In this case, the source gNB may determine that handover to Target gNB#1 is impossible and select a new target gNB.
(b) The source gNB maintains the handover to Target gNB #1 but may determine to perform direct path switching. For example, while it is difficult to configure a new list of candidate relay UE(s) other than the list configured/determined in Step 3 for indirect path switching to Target gNB#1, a suitable cell may exist among the Uu cells belonging to Target gNB#1 to serve the Remote UE. In this case, the source gNB may determine that cell as the target cell and notify Target gNB#1 of direct path switching (i.e., legacy handover).
(c) The source gNB maintains the handover decision and indirect path switching decision to Target gNB #1 but may newly select a target cell and/or candidate relay UE list. For example, the source gNB may configure/determine a new list of candidate relay UE(s) in addition to the list configured/determined in Step 3. For example, the source gNB may determine that serving the Remote UE via a Relay UE belonging to that list is preferable to serving the Remote UE via a Uu cell belonging to target gNB#1, or via a Uu cell belonging to another nearby gNB, or via a candidate relay UE. Such cases may include, for example, when the radio quality of the PC5 link between the Remote UE and the Candidate relay UE is better, or when the radio quality of the Uu link is poor if connecting the Remote UE via a direct path through the Uu cell. The source gNB maintains the handover decision to Target gNB #1 and the indirect path switching decision, but may newly select the target cell and/or the candidate relay UE list.

Alternatively, if a HANDOVER PREPARATION FAILURE message is received from Target gNB#1 as in Step 5, it is also possible to execute (a), (b), or (c) immediately based on the source gNB implementation or the operator's pre-configuration.

In the examples of FIGS. 18a and 18b, it is assumed that the Source gNB, in Step 6, has re-determined that the remote UE to be served via an indirect path from Target gNB #1. Furthermore, for this purpose, it is assumed that the Source gNB configures values different from those included in the list of candidate relay UE(s) in Step 3 and/or values different from those of the Target cell, and includes the configured/determined values in the HANDOVER REQUEST message.

Step 7: The Source gNB may re-determine a list of candidate relay UE(s) that can be utilized as an indirect path at Target gNB #1, based on the measurement results received from the remote UE in Step 1 and/or the list of candidate relay UE(s) determined/configured in Step 3. The Source gNB transmits a HANDOVER REQUEST message that includes the list of candidate relay UE(s) to Target gNB #1.

Step 8: Target gNB #1 selects a relay UE from the list of candidate relay UE(s) received in Step 7 to assist in DL/UL data transmission for the remote UE.

Step 9: Target gNB #1 conveys the information necessary for the relay UE selected in Step 8 to serve the remote UE via the RRC Reconfiguration procedure.

Step 10: Target gNB #1 transmits a HANDOVER REQUEST ACK message to the source gNB. HANDOVER REQUEST ACK message includes an RRC Reconfiguration message that includes the information necessary for the Remote UE to access Target gNB #1 via the relay UE finally selected in Step 8.

Step 11: The source gNB transmits the RRC Reconfiguration message received in Step 10 to the remote UE.

Step 12: The source gNB transmits an SN STATUS TRANSFER message to Target gNB #1.

Step 13: The remote UE establishes a PC5 connection with the relay UE based on the RRC Reconfiguration message received in Step 11.

Step 14: The remote UE may complete the handover procedure by generating an RRC Reconfiguration Complete message in response to the RRC Reconfiguration message received in Step 11 and transmitting it to Target gNB #1 via the relay UE.

Step 15: From now on, DL/UL data is exchanged via the relay UE located within the cell of Target gNB #1.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

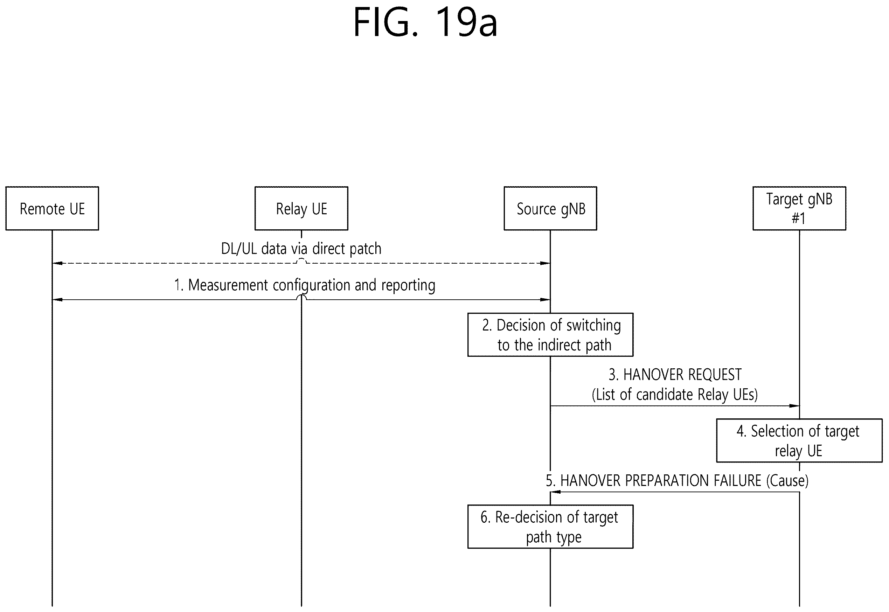

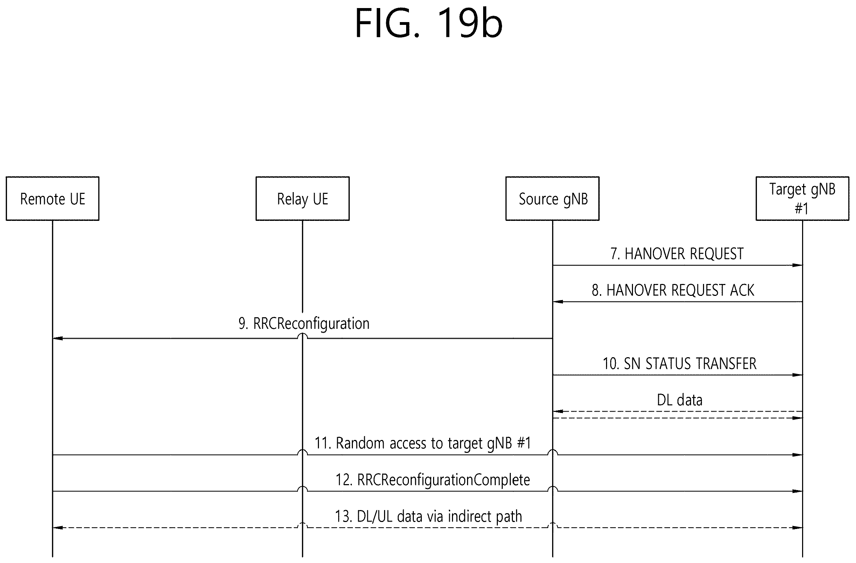

**FIG. 19a** **and** **FIG. 19b** **show an example of a procedure for the source gNB to redetermine path switching according to an embodiment of the present disclosure.**

According to the examples in FIG. 19a and FIG. 19b, the Target gNB may support inter-gNB path switching for remote UEs. FIG. 19a and FIG. 19b illustrate an example where the Target gNB cannot select a target relay UE capable of servicing the remote UE from the list of candidate relay UE(s) transmitted by the source gNB. This example describes how the Target gNB can quickly notify the source gNB of this fact, enabling the source gNB to determine a new Target gNB, target cell, target path type, or list of candidate relay UEs.

Step 0~5: The same operations as steps 0 to 5 in FIG. 18a and FIG. 18b are performed.

Step 6: Based on the cause value or indication received in Step 5, the source gNB may once again perform one or more of the following: target gNB selection, target cell selection, or target path type selection (e.g., Step 2). As a result, the source gNB may perform one or more of the following:
(a) The source gNB may determine a new target gNB based on that the source gNB recognizes that handover to Target gNB #1 is impossible. For example, i) when direct path switching to Target gNB #1 is impossible (e.g., when none of the Uu cells belonging to Target gNB#1 provide adequate radio quality, or when the cell cannot support the S-NSSAI for the remote UE, making the source gNB impossible to select a Uu cell belonging to Target gNB#1 as the target), or ii) when it is difficult to configure a new list of candidate relay UE(s) other than the list configuration/determined in Step 3 for indirect path switching to Target gNB #1. In this case, the source gNB may determine that handover to Target gNB#1 is impossible and select a new target gNB.
(b) The source gNB maintains the handover to Target gNB #1 but may determine to perform direct path switching. For example, while it is difficult to configure a new list of candidate relay UE(s) other than the list configured/determined in Step 3 for indirect path switching to Target gNB#1, a suitable cell may exist among the Uu cells belonging to Target gNB#1 to serve the Remote UE. In this case, the source gNB may determine that cell as the target cell and notify Target gNB#1 of direct path switching (i.e., legacy handover).
(c) The source gNB maintains the handover decision and indirect path switching decision to Target gNB #1 but may newly select a target cell and/or candidate relay UE list. For example, the source gNB may configure/determine a new list of candidate relay UE(s) in addition to the list configured/determined in Step 3. For example, the source gNB may determine that serving the Remote UE via a Relay UE belonging to that list is preferable to serving the Remote UE via a Uu cell belonging to target gNB#1, or via a Uu cell belonging to another nearby gNB, or via a candidate relay UE. Such cases may include, for example, when the radio quality of the PC5 link between the Remote UE and the Candidate relay UE is better, or when the radio quality of the Uu link is poor if connecting the Remote UE via a direct path through the Uu cell. The source gNB maintains the handover decision to Target gNB #1 and the indirect path switching decision, but may newly select the target cell and/or the candidate relay UE list.

Alternatively, if a HANDOVER PREPARATION FAILURE message is received from Target gNB#1 as in Step 5, it is also possible to execute (a), (b), or (c) immediately based on the source gNB implementation or the operator's pre-configuration.

In the examples of FIGS. 19a and 19b, it is assumed that in Step 6, the Source gNB determined that Target gNB #1 would serve the remote UE via a direct path, not an indirect path. The Source gNB may also decide on a handover to a direct path (i.e., the target Uu cell) belonging to another gNB in the vicinity, not Target gNB#1. In this case, Steps 7 to 13 may be performed for another gNB, not Target gNB#1.

Step 7: Based on the measurement results received from the remote UE in Step 1, the Source gNB may determine the target Uu cell that can be utilized on the direct path to Target gNB #1. The Source gNB transmits a HANDOVER REQUEST message that includes information about the target Uu cell to Target gNB #1.

Step 8: Target gNB #1 decides whether to accept/approve the handover to the target Uu cell for the Remote UE received in Step 7. Target gNB #1 may accept the handover to the terminal in the target Uu cell. In this case, Target gNB #1 may include an RRC Reconfiguration message including the information necessary for the Remote UE to access Target gNB #1 within the HANDOVER REQUEST ACK message. Target gNB #1 transmits the HANDOVER REQUEST ACK message to the source gNB.

Step 9: The source gNB forwards the RRC Reconfiguration message received in Step 8 to the remote UE.

Step 10: The source gNB transmits an SN STATUS TRANSFER message to Target gNB #1.

Step 11: Based on the RRC Reconfiguration message received in Step 9, the remote UE initiates the random access procedure towards Target gNB #1.

Step 12: The Remote UE may complete the handover procedure by generating an RRC Reconfiguration Complete message in response to the RRC Reconfiguration message received in Step 9 and delivering it to Target gNB #1 via the direct path.

Step 13: From this point onward, DL/UL data is exchanged via the Uu cell of Target gNB #1.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

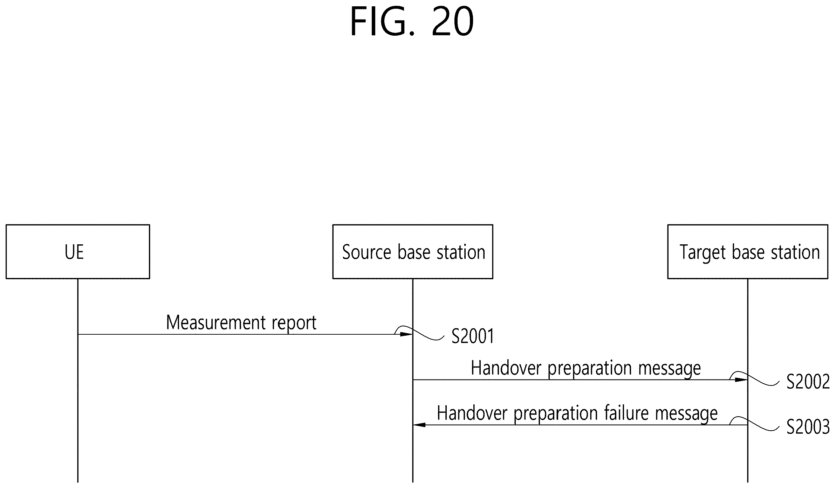

**FIG. 20** **shows an example of a procedure according to an embodiment of the present disclosure.**

For reference, the procedure shown in FIG. 20 is merely an example, and the scope of the present disclosure is not limited by the example in FIG. 20.

For example, with respect to the example of FIG. 20, operations described in the examples of FIGS. 1 through 19a and FIG. 19b may also be applied. For example, even operations or contents not directly described in the examples of FIGS. 19a and 19b may be applied, provided they are described in various examples of the present disclosure.

In the example of FIG. 20, the UE may correspond to the Remote UE in the examples of FIGS. 6 to 19a and FIG. 19b. The source base station may be the source gNB or source NG-RAN node of FIG. 6 to FIG. 19a and FIG. 19b. The target base station may be the target gNB or target NG-RAN node of FIG. 6 to FIG. 19a and FIG. 19b.

In step S2001, the UE may transmit a measurement report message to the source base station. For example, the source base station may receive a report message from the UE including measurement results related to one or more relay UEs.

The measurement report message may include the relay UE's ID, the serving cell ID, and the sidelink measurement results for the one or more relay UEs.

Before Step S2002 is performed, the source base station may determine the target path type for the UE based on the measurement results. The target path type may be an indirect path or a direct path. If the source base station determines the target path type to be an indirect path, the source base station may generate a Candidate Relay UE Information List IE. For example, based on the measurement results, the source base station may determine the candidate relay UE information list IE, which includes one or more candidate relay UE(s) that can be used as an indirect path for the UE from the first target base station.

In step S2002, the source base station may transmit a handover request message to the target base station. The handover request message may include a candidate relay UE Information list IE. The criticality of this IE may be set to reject. That is, the target base station cannot ignore this IE.

If the target base station supports the IE, the target relay UE may be selected based on the candidate relay UE information list IE. The target base station may select the target relay UE based on at least one of the Radio Resource Control (RRC) state of the one or more candidate relay UEs, the load of the one or more candidate relay UEs, and/or the link quality between the one or more candidate relay UE(s) and the target base station. Based on failing to select a target relay UE from one or more candidate relay UE(s) included in the Candidate Relay UE Information List IE, the target base station may perform step S2003.

In step S2003, the target base station may transmit a handover preparation failure message to the source base station. The handover readiness failure message may include a cause value. The cause value may indicate that the IE is not supported by the first target base station, or that the first target base station failed to select a target relay UE from one or more candidate relay UE(s) included in the IE.

After step S2003 is performed, the source base station may re-determine the UE's target path type. For example, the source base station may perform one or more of the following operations: selecting a target base station, selecting a target cell, or selecting a path type from among an indirect path and a direct path.

For example, the source base station may determine a second target base station as the target base station. In another example, the source base station may maintain the target base station but change the target path type from a direct path to an indirect path, or change the target path type from an indirect path to a direct path. For example, the source base station may maintain the target base station and maintain the target path type, but may also newly select the target cell and/or the candidate relay UE information list IE.

The operations of the diagrams based on the various examples described above may be performed individually or in conjunction with the operations of other diagrams.

According to one embodiment of the present disclosure, during the handover process, the target gNB may notify the source gNB that inter-gNB direct/indirect-to-indirect path switching was not properly performed. For example, the source gNB may notify the target gNB by including a candidate relay UE list in the HANDOVER REQUEST message. For example, if the Target gNB does not support inter-gNB direct-to-indirect path switching and/or indirect-to-indirect path switching, or if the Target gNB cannot select an appropriate target relay UE from the candidate relay UE list received from the Source gNB, the Target gNB may transmit a cause value or indication to the Source gNB to notify this. Based on the cause value or indication received from the target gNB, the source gNB may perform the handover procedure targeting a new target (e.g., gNB, cell, path type, candidate relay UE list).

The present disclosure can have a variety of effects.

For example, according to the present disclosure, if the target gNB does not support inter-gNB path switching for remote, the source gNB may quickly select another gNB. The source gNB may handover the terminal to continue providing service through the new gNB. Alternatively, the target gNB may be unable to select an appropriate target relay UE from the list of candidate relay UE(s) sent by the source gNB. In such cases, the target gNB notifies the source gNB of this fact, thereby enabling the source gNB to quickly make a new decision regarding the handover target (e.g., gNB, cell, path type, candidate relay UE list). This allows the source gNB to handover the terminal to the newly determined target, continuing to provide service to the terminal via the new gNB.

For example, according to various embodiments of the present disclosure, path switching can be effectively supported during the terminal's handover process. For example, the Target gNB may not support inter-gNB path switching for remote. Alternatively, the Target gNB may fail to select an appropriate Relay UE from the list of candidate relay UEs. In such cases, the source gNB may quickly make a new decision regarding the target of the handover (e.g., gNB, cell, path type, candidate relay UE list). Accordingly, the source gNB may perform the handover for the terminal based on the newly determined target and continue to provide service to the terminal via the new node.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE, remote UE, relay UE) described in the present specification may be implemented by the apparatus of FIGS. 1 to 4 described above. For example, the terminal (e.g., UE, remote UE, relay UE) may be the first device 100 or the second device 200 of FIG. 2. For example, an operation of a terminal (e.g., UE, remote UE, relay UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE, remote UE, relay UE) described herein by executing instructions/programs stored in one or more memories 104 or 204.

In addition, instructions for performing an operation of a terminal (e.g., UE, remote UE, relay UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE, remote UE, relay UE) described in the present disclosure of the present specification.

For reference, the operation of a network node (e.g., AMF, SMF, UPF, PCF, NEF, UDM, DN, etc.) or base station (e.g., NG-RAN, gNB, source base station, target base station, source NG-RAN, target NG-RAN, source gNB, target gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication related to handover, the method performed by a source base station, and comprising:
receiving a report message including a measurement result related to one or more relay User Equipments (UEs), from a UE;
determining a target path type for the UE based on the measurement result;
transmitting a handover request message to a first target base station,
wherein the handover request message includes a candidate relay UE information list Information Element (IE), and
wherein the criticality of the IE is assigned as reject;receiving a handover preparation failure message including a cause value from the first target base station; and
re-determining the target path type of the UE,
wherein the cause value indicates that the IE is not supported by the first target base station, or indicates that the first target base station failed to select a target relay UE from among one or more candidate relay UEs included in the IE.

2. The method of claim 1,
wherein a measurement report message including an ID of a relay UE, a serving cell ID, and a sidelink measurement result for the one or more relay UEs.

3. The method of claim 1 or claim 2, further comprising:
determining the candidate relay UE information list IE that can be used for an indirect path for the UE at the first target base station, based on the measurement result.

4. The method of any one of claims 1 to 3,
wherein the re-determining the target path type includes one or more of the following operations:
selecting a target base station, selecting a target cell, or selecting a path type between indirect path and direct path.

5. The method of any one of claims 1 to 4,
wherein the target path type is a direct path between the first target base station and the UE, or an indirect path communicating with the first target base station via a relay UE.

6. The method of any one of claims 1 to 5,
wherein the re-determining the target path type includes: selecting a second target base station as a target base station.

7. The method of any one of claims 1 to 5,
wherein the re-determining the target path type includes: maintaining the first target base station as a target base station, while changing the target path type from a direct path to an indirect path or changing the target path from the indirect path to the direct path.

8. The method of any one of claims 1 to 5,
wherein the re-determining the target path type includes: maintaining the first target base station as the target base station, maintaining the target path type, and newly selecting the target cell and/or the candidate relay UE information list UE.

9. A source base station for performing communications related to handover, the source base station comprising:
at least one transceiver;
at least one processor; and
at least one memory operatively connectable to the at least one processor and storing instructions,
wherein the operation performed based on the instructions being executed by the at least one processor comprising: the method of any one of claims 1 to 8.

10. An apparatus in mobile communication, the apparatus comprising:
at least one processor; and
at least one memory operatively connectable to the at least one processor and storing instructions,
wherein operations performed based on the instructions being executed by the at least one processor comprising: the method of any one of claims 1 to 8.

11. A non-transitory Computer Readable Medium (CRM) storing instructions that, based on being executed by at least one processor, the at least one processor performs operations comprising: method of any claims 1 to 8.

12. A method for performing communication, the method performed by a target base station, and comprising:
receiving a handover request message for requesting a handover of a User Equipment (UE) from a source base station,
wherein the handover request message includes a candidate relay UE information list Information Element (IE), and
wherein the criticality of the IE is assigned as reject;
transmitting a handover preparation failure message including a cause value to the source base station; and
wherein the cause value indicates that the IE is not supported by the target base station, or indicates that the target base station failed to select a target relay UE from among one or more candidate relay UEs included in the IE.

13. The method of claim 12,
wherein the candidate relay UE information list IE is determined by the source base station, based on measurement result related to one or more relay UEs received from the UE.

14. The method of claim 12 or claim 13, further comprising:
selecting a target relay UE based on the candidate relay UE information list IE, based on that the target base station supports the IE.

15. The method of claim 14,
wherein the handover preparation failure message is transmitted, based on that the target base station failed to select a target relay UE from one or more candidate relay UEs included in the candidate relay UE information list IE.

16. The method of claim 14,
wherein the selecting the target relay UE is performed, based on at least one of the Radio Resource Control (RRC) state of the one or more candidate relay UEs, the load of the one or more candidate relay UEs, and/or the link quality between the one or more candidate relay UEs and the target base station.

17. A target base station for performing communications related to handover, the source base station comprising:
at least one transceiver;
at least one processor; and
at least one memory operatively connectable to the at least one processor and storing instructions,
wherein the operation performed based on the instructions being executed by the at least one processor comprising: the method of any one of claims 12 to 16.
